Europäisches Patentamt

European Patent Office

Office européen des brevets

(11) Publication number: **0 583 060 A2**

## EUROPEAN PATENT APPLICATION

(21) Application number: 93305247.4

(22) Date of filing: 05.07.93

(51) Int. Cl.5: **G06F 15/72**

(30) Priority: **24.07.92 US 919722**

(43) Date of publication of application:
**16.02.94 Bulletin 94/07**

(84) Designated Contracting States:
**AT BE CH DE DK ES FR GB GR IE IT LI LU MC NL PT SE**

(71) Applicant: **THE WALT DISNEY COMPANY**
**1313 Harbor Boulevard**
**Anaheim, California 92803(US)**

(72) Inventor: **Monroe, Marshall McLaury**
**1341 5th Street, No. 12**
**Glendale, California 93063(US)**
Inventor: **Redmann, William G.**
**3152 Dalhart Avenue**
**Simi Valley, California 93063(US)**

(74) Representative: **LLOYD, Patrick Alexander Desmond**
**Reddie & Grose**
**16 Theobalds Road**
**London WC1X 8PL (GB)**

(54) **Method and system for creating an illusion of three-dimensionality.**

(57) A method and system are disclosed for generating for display on a display surface a plurality of two-dimensional images of a virtual world scene that appears distortion-free and naturally three-dimensional to an observer whose eyepoint moves between different positions relative to the display. At each of a plurality of eyepoint positions, an image of the scene is presented in correct three-dimensional perspective for that position and with motion parallax to allow the observer, by moving relative to the display, to see "behind" and "around" displayed objects. The images can be displayed on a screen or other surface physically existing in the real world, or on a virtual screen or surface represented by data and "existing" in a second virtual space. The images, moreover, can be created and displayed in real time as the observer's eyepoint moves relative to the display or, if desired, created in advance for later real-time display for a moving eyepoint.

FIG. 1A

EP 0 583 060 A2

## BACKGROUND OF THE INVENTION

This invention relates to a method and system for creating an illusion of a large three-dimensional environment by display of computer-generated, two-dimensional images.

Many amusement parks have so-called "dark rides" of the type in which an observer or "guest," seated in a moving vehicle, is transported through a fantastic and magical world within a darkened (or "light-controlled") building. An example of such a ride is a fun house, in which a guest seated in a car riding on tracks travels through sets depicting various vistas, such as a dungeon populated with vampires or other characters, followed by a cemetery with ghosts rising from the ground, and so forth. Dark rides seek to create an overall illusion in the guest of having been transported to another world by carefully integrating the different sets so that they seamlessly blend into one another.

To create an illusion of three-dimensionality in such sets, dark rides traditionally have relied on various well-known theatrical effects typically created by skilled artisans to achieve a desired environmental appearance. To create an illusion of three-dimensionality, such effects rely on the creation of one or more cues that the human mind uses to perceive a scene as being three-dimensional. These perceptual cues include at least the following: (1) binocular vision (different images are presented to left and right eyes due to the distance between the eyes); (2) motion parallax (two objects appear to move relative to each other based on the objects' distances from the observer); (3) diminution (objects get smaller and appear foreshortened as their distance from an observer increases); (4) atmospheric perspective (distant objects tend to lose contrast, and to assume the color of any atmospheric haze present between the object and the observer); (5) lighting effects (such as reflection effects); (6) form shadings (such as cast and form shadows); (7) overlap and hidden surfaces (objects in front occlude or obscure objects behind); (8) perspective and convergence; and (9) focal length/depth of field (focus effects). The more of these perceptual cues there are in an image, assuming that the cues are correctly presented, the more striking will be the perception (or illusion) that the image is three-dimensional.

One example of a theatrical effect previously used with dark rides to create an illusion of three-dimensionality is forced perspective. This technique relies on diminution and, sometimes, atmospheric perspective (through clever paint schemes or fog) to create a sense of a deep three-dimensional space. In a forced perspective set, the scale of a model diminishes with increasing distance from the viewer. For instance, an alley might be built at full scale ten feet from the ride track and diminish to a one-third scale twenty feet from the track. The point of convergence with such scaling, from the viewpoint of a guest in a ride vehicle, gives the impression of a set more than one-hundred feet deep.

Forced perspective sets present a number of problems to a set designer. One problem is that constraints imposed by close walls and tight spaces in the rides with which these sets are used make it difficult, if not impossible, to construct vistas on a large scale. Another problem is that, while a forced perspective set can reduce the amount of space that would otherwise be required to create an illusion of a very deep space, the set presents a truly correct three-dimensional view into its space from only a single position. But a guest riding past the set will view the set from many positions, possibly none of which is the truly correct one. Thus, although a guest moving past a forced perspective set will experience motion parallax in the images seen, those images will be recognizably distorted.

Still another problem with forced perspective sets is that the use of animation in the set is limited by the fact that objects cannot move into or out of the set without conflicting with the forced perspective illusion, since the scale of the moving object typically does not change. Even more, elaborate pyrotechnics or destruction of set pieces in connection with the creation of special effects is not feasible due to the hazards involved, the expense, or the non-repeatability of the effect.

To avoid some of these problems, large-scale vistas can be created, animation can be performed, and elaborate (even destructive) special effects can be implemented "off stage" and recorded on film or video. Thereafter, the film or video can be projected onto a screen within the set to be viewed by a guest as he or she rides past. Clouds and lighting on far walls, objects vanishing into the distance and ghosts leaping into the sky are all examples of effects that can be achieved with projection techniques. A physical set can be replaced entirely by a projection of a grand vista onto a screen.

Projection, however, presents its own set of problems when the desire is to create and maintain a convincing illusion of three-dimensionality. A primary problem is that ordinary projection onto a screen presents only a two-dimensional image that is perceived as such. This is because, in standard systems for generating video and film imagery, each scene is shot from a camera viewpoint that does not necessarily correspond with the viewpoint an observer has of the displayed image. The video or film as a result does not present correct perceptual cues to the observer, specifically perspective and motion parallax cues, and the image consequently is recognized as being two-dimensional and flat. This makes it very difficult to

EP 0 583 060 A2

realistically merge or register a physical prop within a real-world set or vista seamlessly into a projected image of that prop or set. Ordinary projection, for these reasons, is typically acceptable only for displaying far off scenery.

One way in which the prior art has sought to solve this problem of viewpoint alignment is to record a scene by a camera mounted on a dolly or other vehicle which moves substantially at the same speed, along the same path, and at the same relative distance from the scene, as the ride vehicle and guest will be moving relative to the projection screen on which the scene will be displayed. As the camera approaches, passes and moves beyond the scene, the camera rotates so as to "track" the scene to keep it centered on the film or image plane of the camera. During playback, the scene is projected onto a stationary screen in synchronism with the ride vehicle's movement past the screen so that a guest in the vehicle will be at approximately the same position relative to the screen at each instant in time as was the camera when the scene was recorded. The guest thus sees a scene with a constantly shifting point of view which approximates the guest's shifting point of view. The result is an illusion of motion parallax in the displayed image, allowing the guest to see "around" and "behind" objects as might occur in the real world.

While the foregoing prior art synchronous motion parallax technique can create some sense of three-dimensionality in a two-dimensional projection of an image, particularly when combined with stereoscopic projection, the recording and subsequent viewing of the image produces keystone distortion. This distortion can detract from the illusion of three-dimensionality because perspective is incorrectly presented.

Yet another problem with the foregoing prior art motion parallax technique is that an illusion of three-dimensionality due to motion parallax may be perceived properly only by guests who synchronously follow the same trajectory as the camera followed when it recorded the scene. If a guest's positions when viewing a projected scene do not match those that the camera was in when it recorded the scene, the illusion of natural three-dimensionality is lost.

As a consequence of these limitations, synchronous motion parallax projection does not create an effective illusion of three-dimensionality in situations which allow a guest to walk or move freely, without a pre-defined trajectory, in front of a projection screen.

Another known approach for creating a three-dimensional illusion by display of an image on a two-dimensional surface (such as by projection onto a screen) relies on stereoscopic vision. With this approach, separate images are presented for left and right eye views. The separate images are recorded and displayed in such a manner that, when a guest sees the images through an appropriate optical filter, the views are received only by the appropriate eye and "fused" or merged by the guest's brain. This creates an illusion of three-dimensionality in the displayed image based on the inter-ocular separation of a human being's eyes. Eyeglasses having electronically shuttered lenses, polarized lenses, colored filters, holographic optical elements or other devices are commonly used to filter the images and to create the effect.

But a traditional stereoscopic display also can present problems. Stereoscopic image displays alone do not present correct motion parallax and perspective cues in displayed images for an observer moving relative to the display. Thus, the illusion of three-dimensionality provided by a stereoscopic display alone is not complete.

In view of the foregoing, it would be desirable to provide a method and system for displaying a two-dimensional image on a surface such that a guest observing the image will perceive a natural and distortion-free illusion of depth and three-dimensionality in the image as the guest moves, in a random or predetermined fashion, from position to position relative to the display.

It would be still further desirable to provide such a method and system for displaying an image that includes an object in the image appearing to merge with a real-world prop, such that the object and the prop dimensionally extend into one another to present the illusion of the prop extending into the image (and vice versa).

It would additionally be desirable to provide such a method and system for stereoscopically displaying a perspective image on a surface so as to present to an observer of the image perceptual cues of motion parallax and binocular vision

The invention is defined by the independent claims to which reference should be made.

Embodiments of the invention may create, for one or a number of guests seated together in a ride vehicle moving along a defined trajectory, the illusion of an expansive, distortion-free, three-dimensional space, potentially filled with static or animated objects, that is created by displaying two-dimensional images.

Embodiments of the invention may create such an illusion of three-dimensionality without requiring a guest to view the displayed scene by travelling along a defined or predetermined trajectory, or to wear special viewing devices.

3

Embodiments of the invention may create such an illusion of three-dimensionality for a guest which allows a displayed image to appear to merge with an object in the real world by dimensional extension into one another as the guest moves from position to position relative to the display and the object.

Embodiments of the invention may create such an illusion of three-dimensionality by display of stereoscopic images which present to an observer perceptual cues of three-dimensionality including motion parallax and binocular vision.

A preferred embodiment of the invention provides a method and system for creating and displaying on a display surface, for viewing by an observer, a plurality of images of a virtual world scene which appears distortion-free and naturally three-dimensional to the observer as the observer moves between different positions relative to the position of the display surface. In one embodiment of the invention, a data base containing three-dimensional descriptions of a virtual environment or space, including static or animated virtual objects within that space, is maintained by a computer graphic system in terms of a computer (also "object" or "virtual world") coordinate system. The virtual world, via its coordinate system, is defined to be in a relationship with the "real-world" or other coordinate system in which the observer's eyepoint is situated, so that positions of the observer's eyepoint and of the display in the real world or other space have corresponding positions in the virtual space (and vice versa).

The images created for display are each associated with a different one of the observer's plurality of eyepoints. Each image is created by transforming the three-dimensional data defining an object into image data through a transformation with respect to a center of projection relative to which at least a portion of the object subtends a respective first field of view, the center of projection being at a position in the virtual space that is substantially coincident with a position corresponding to the position of the eyepoint in the real world or other space. Based on these image data, images are generated and displayed on the display surface so that each respective image of the at least portion of the object subtends a respective second field of view relative to the eyepoint associated with the image. The transformation is selected to cause, for each of the plurality of images, the respective first and second fields of view to be substantially the same. Images may be generated and displayed by the invention in real time as the observer's eyepoint moves relative to the display from one position to another, or generated beforehand (if the observer's eyepoint positions can be predicted or are otherwise predetermined) and stored for later real time playback.

Substantially any means may be used to determine an observer's eyepoint position. However, in accordance with another aspect of the invention, a particularly advantageous way of doing so uses an imaging device such as a video camera viewing a space including the moving observer. Successive fields of pixel-based images captured by the imaging device are subtracted from one another to identify locations within images of pixels the values of which have changed from one image to another. These locations are converted to data indicating, in two or three dimensions, the position of the observer.

In a further preferred embodiment of the invention, images of virtual objects generated by the invention need not be displayed on real-world display surfaces. Instead, generated images may be converted into a series of two-dimensional textures which are mapped onto a virtual surface (such as a polygon) synthesized by a "virtual reality" computer graphic system and located at a position within a second virtual world. The eyepoints of the observer would be eyepoints established or determined by the computer in the second virtual world viewing the virtual surface, rather than eyepoints in the real world viewing a real display surface. The texture for an image of an object in the first virtual space associated with a particular eyepoint position is displayed on the virtual surface when the observer's eyepoint is determined to be substantially at that position:

## BRIEF DESCRIPTION OF THE DRAWINGS

A complete understanding of the foregoing and other aspects of the invention, and of its advantages, may be gained from consideration of the following detailed description, taken in conjunction with the accompanying drawings, in which like reference characters refer to like parts throughout, and in which:

FIG. 1A illustrates a simplified block diagram of the transformation portion of a computer graphic system for projecting two-dimensional images of a three-dimensional virtual world modeled from a data base of points, surfaces and objects in three-dimensional virtual world coordinates;

FIGS. 1B-1E illustrate how a conventional computer graphic system renders and displays images modeled in three-dimensional data bases using conventional transformation techniques;

FIG. 2 is a plan view of a ray-trace diagram illustrating principles of one aspect of the present invention;

FIG. 3 shows one exemplary environment in which the present invention may be used, in which an image of a three-dimensional virtual world scene is monoscopically projected onto a stationary screen to present correct perspective and motion parallax cues as a guest moves from position to position relative to the screen;

FIG. 4 shows how an image displayed in accordance with the present invention and objects in the real world can be "dimensionally extended" into one another;

FIG. 5 is a plan view of a ray trace diagram showing how virtual world objects can be displayed so as to appear positioned in the real world in front of the display;

FIG. 6 is a diagram of a flow chart of a software routine that may be used to program a computer graphic system in accordance with principles of the present invention;

FIG. 7 is a flow chart of the "Draw The Scene" (block 640) portion of the flow chart of FIG. 6;

FIG. 8 is a flow chart of the "Get Eyepoint Position" (block 660) portion of the flow chart of FIG. 6;

FIG. 9A shows an elevation view of a system to determine the position of an observer using a video imaging device in accordance with an aspect of the present invention;

FIG. 9B shows a plan view of the system shown in FIG. 9A;

FIG. 10 is a flow chart of the main loop of a routine which may be used to program the system illustrated in FIG. 9;

FIG. 11 is a flow chart of a routine called by the "get centroid" portion of the flow chart of FIG. 10; and

FIG. 12 illustrates how images of objects in a first virtual space may be displayed as texture on a virtual surface placed within a second virtual space in accordance with an aspect of the present invention.

## DETAILED DESCRIPTION OF THE INVENTION

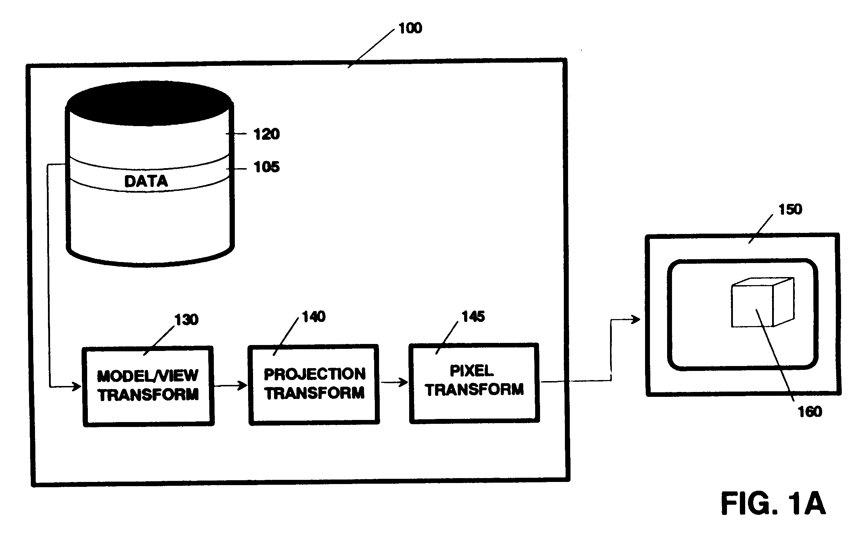

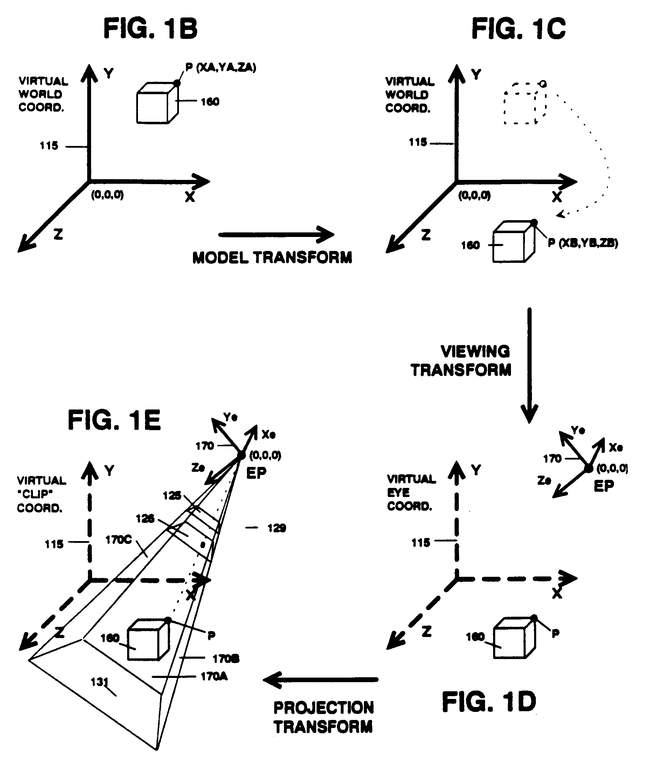

FIG. 1 shows a conventional computer graphic system (FIG. 1A), and a method typically used by the system (FIGS. 1B-1E), for performing a series of transformations to cause images of objects modeled in a three-dimensional virtual world data base to be rendered for display on a two-dimensional display device such as a video monitor or Head Mounted Display ("HMD"). The transformation method illustrated in FIGS. 1B-E is of the type conventionally used by prior art "virtual reality" systems to render and manipulate three-dimensional objects in a world (sometimes called a "virtual world" or "virtual space") synthesized by the computer.

More particularly, FIG. 1A shows a simplified block diagram of that portion of a conventional image generator computer 100 that performs transformations on data in order to render images for display on a CRT or other display device. The block diagram of computer 100 specifically represents an IRIS-4D Indigo work station manufactured by Silicon Graphics, Inc. of Mountain View, California, but is broadly illustrative of other known image generator computers.

In FIG. 1A, computer 100 receives from a disk drive or other memory device 120 three-dimensional object data 105 specifying points, surfaces or objects in a three-dimensional space. Computer 100 includes hardware and/or software 130 for performing on the data model and view transformations (or a concatenation of these two transformations), and hardware and/or software 140 for performing a projection transformation, to produce data (as described below) which represents an object as it would appear mapped onto a theoretical two-dimensional view plane. These data then are transformed by hardware and/or software 145 into a pixel-based image for display to an observer on a two-dimensional display device 150 (illustrated in FIG. 1A as a TV monitor but which may, in fact, be an HMD or any other suitable display device). In the case of FIG. 1A, the data base has modeled, and the computer graphic system is displaying on display device 150, a cube 160.

Many software packages are commercially available in the prior art, and have been used, to program computers such as system 100 to model and render images such as cube 160 in FIG. 1A. One example of such software is the Graphics Library™ set of graphics and utility routines published by Silicon Graphics, Inc. for use with the IRIS Indigo work station. Such software enables a graphics programmer, using polygons, lines, meshes and other conventional techniques, to model cube 160 to have substantially any coloring or shading, to be of substantially any size, to be stationary at substantially any defined position, or to be rotating or moving from one position to another at substantially any rate along substantially any trajectory. It will, of course, be appreciated by persons skilled in the art that another object, or number of objects, may be modeled and rendered instead of or in addition to cube 160.

When displaying three-dimensional objects such as cube 160, it is useful not only to be able to move the objects relative to one another and to the viewer, to rotate and to scale them, but also to be able to change the viewer's point of view, field of view, and orientation in the virtual world relative to the object. FIGS. 1B-1E illustrate in simplified fashion how conventional computer graphic systems accomplish this, and render the resulting image for display using model, view and projection transformations.

The data defining virtual cube 160 include information placing a vertex or other point P of the cube in the modeled world or space at a position shown in FIG. 1B specified by the triplet $(X_A, Y_A, Z_A)$. These coordinates are defined, as shown in FIG. 1B, relative to the origin of a right-handed cartesian computer or "virtual world" coordinate system 115 having an origin (0,0,0). There typically is no limit to the size of coordinates $(X_A, Y_A, Z_A)$ other than that imposed by the largest numbers that the computer graphic system can use to specify the coordinates.

The model transformation is used to translate, scale and rotate objects to be rendered. For example, suppose as shown in FIG. 1C that cube 160 has moved from its first position in FIG. 1B (shown in FIG. 1C by dotted lines) to a second position (shown in FIG. 1C by solid lines) such that the coordinates of the point P are now at $(X_B, Y_B, Z_B)$. This re-positioning of cube 160 is accomplished by transforming the data defining the point at $(X_A, Y_A, Z_A)$ to move the point to position $(X_B, Y_B, Z_B)$, and similarly transforming the data defining all other points on cube 160, so that the cube may be drawn at its new position in the world coordinate system.

Assuming now that cube 160 is at its new position in FIG. 1C, a viewing transformation is used to map the coordinates of the cube into a new "eyepoint coordinate system" 170, shown in FIG. 1D as having an origin at (0,0,0) at the desired eyepoint EP, that specifies the coordinates of the cube relative to that origin. This is done because viewing objects in three-dimensional perspective on a computer screen is like looking at the objects through a hypothetical pane of glass in the shape of the screen. If a ray trace were to be drawn from the eyepoint through the glass until it hits a point on the object, the point on the glass through which the ray passes corresponds to the position on the computer screen at which the computer should draw the point. If this were done for all points on the object, and the correct color and shading were applied to each point (taking into consideration hidden surface removals), the object seen on the glass or computer screen would be indistinguishable from the modeled object. If the position of eyepoint EP in FIG. 1D were to be moved, different perspective views of the object would be obtained.

FIG. 1E shows that the set of all rays leaving the eyepoint EP and passing through a hypothetical pane of glass defines an open-ended four-sided pyramid (generally indicated as 129) the apex of which, called the "viewpoint" or "center of projection," is at the eyepoint EP. (Four sides are shown for convenience only because video screens are conventionally rectangular; the pyramid can in fact be defined to have another number of sides and shape.) Any portion of a virtual object positioned inside the pyramid can potentially be seen (unless its view is blocked by another object). Objects outside the pyramid cannot be seen because the view of these outside objects is clipped by four planes (sometimes called "clipping planes") defined by the sides of the pyramid. Three of these clipping planes are identified in FIG. 1E as bottom clipping plane 170A, right clipping plane 170B and left clipping plane 170C (the top clipping plane is not numbered).

The pyramid thus defines the field of view, into the virtual space in which the cube resides, from the eyepoint. As used herein, the term "field of view" refers to a segment of solid angle having a viewpoint or center of projection as its vertex, and having a direction defined by an axis emanating from that viewpoint. Two fields of view are defined as being identical, or substantially identical, when they encompass the same or substantially the same solid angle, and have the same or substantially the same direction when considered relative to a particular space or coordinate system.

Conventional computer graphic systems also utilize two additional clipping planes. These are shown in FIG. 1E as "far clipping plane" 131, and "near clipping plane" 125. Any object within the field of view that is closer to the eyepoint than the near clipping plane, or farther away from the eyepoint than the far clipping plane, cannot be seen. For the pyramid of FIG. 1E, the top, bottom, side, near and far clipping planes collectively define a viewing "frustum" contained within the field of view, which delimits the visible volume of the virtual world from the eyepoint.

The image to be displayed is defined in FIG. 1E by a projection transformation that maps by mathematical projection points on three-dimensional objects contained within the field of view towards the eyepoint onto a two-dimensional projection or view surface. Such a view surface is shown in FIG. 1E as view plane 126 (although shown as a plane, view surface 126 need not be planar). In FIG. 1E, view plane 126 is shown to be behind near clipping plane 125, although this does not have to be the case. The view plane can be placed alternatively at or on the other side of view plane 126, subject to constraints imposed by the particular system being used. Systems like the IRIS computer, running the GL software library, define the view and near clipping planes to coincide by default. In such systems, positioning the near clipping plane is the same as positioning the view plane.

Prior art virtual reality computer graphics systems conventionally fix the position of the view plane with respect to the center of projection and viewer's eyepoint. The view plane typically is defined to be at a predetermined distance away from the center of projection, and orthogonal to a ray trace connecting the center of projection to the approximate center of the near clipping plane. This arrangement is analogous to a person looking at the virtual space through a pane of glass always held in a fixed position in front of the person's face. To see different views of the space through the glass, the person can either (1) rotate his or her head with the pane of glass, or (2) move with the pane to another position in the space. The result is that an observer of a virtual space created by a conventional computer graphic system can view the space from any of a number of different eyepoint positions, but the view plane on which the scene is displayed (the pane of glass) always remains fixed with respect to the eyepoint.

The foregoing technique of fixing the view plane with respect to the eyepoint can work well to create an illusion of three-dimensionality in situations in which a guest wears a head-mounted display to view a virtual space, with the computer graphics system presenting different perspective views of the space as the user turns his or her head or otherwise moves around in the world. This is because the display surface (i.e., the CRT housed within the HMD) always remains in a fixed relationship with respect to the observer's head and eyes. However, the technique would not work well to create a natural illusion of depth and three-dimensionality in situations (such as those encountered in dark rides) in which a virtual world scene is shown on a display surface which is being viewed by a guest whose position relative to the display surface might be changing.

The present invention solves this problem by generating for display different views of a computer-generated virtual space as a function of the changing position of the guest's eyepoint relative to the position of the display surface. This enables a guest to see "behind" and "around" objects in the displayed scene from different positions relative to the display surface on which the images are presented just as the guest could do with physical objects actually existing in the real world.

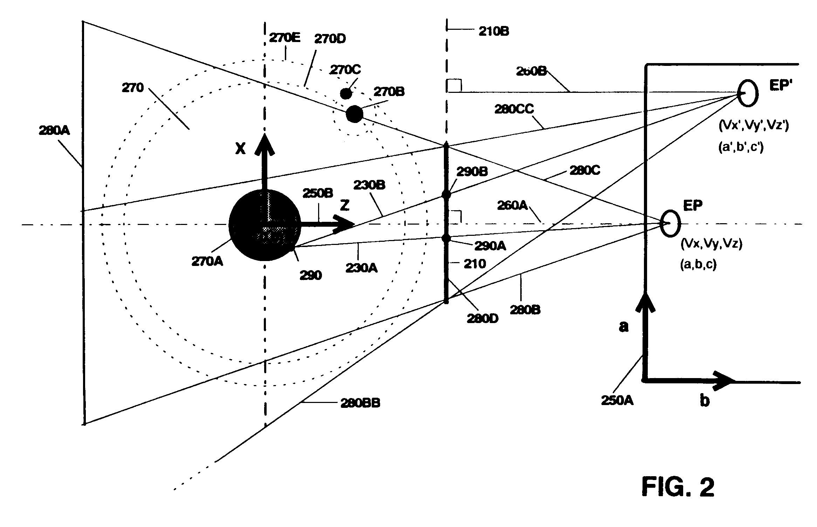

The invention will be readily understood from FIG. 2, which depicts a simplified two-dimensional plan view of a ray-trace diagram showing how an object may be rendered for display onto at least a portion of a screen in accordance with an aspect of the invention. FIG. 2 is a view looking down, e.g., from the ceiling of a room in a dark ride.

In FIG. 2, a three-dimensional a-b-c coordinate system 250A is defined for describing the position of an observer s eyepoint relative to the position of a display surface 210 in the real world (the "c" axis, not labelled, points positively into the plane of the drawing in accordance with a right-hand convention). Similarly, an X-Y-Z coordinate system 250B is defined in virtual world coordinates (the Y axis, not labelled, points positively out of the plane of the drawing). A conventional video image display device such as, for example, a video projector (not shown) casts onto display surface 210, from a point on a line intersecting the substantial center of the display surface and substantially normal to the surface, light representative of an image generated by a three-dimensional computer graphics system (also not shown). (Persons skilled in the art will appreciate that the particular type of display surface, and the particular equipment used to display the image on the screen, is not important to gaining an understanding of, or implementing, the present invention. Surface 210 can be substantially any type of display surface --such as a flat or curved front or rear projection screen, a wall, a suitably sized self-contained CRT or LCD video monitor, or any other mechanism for displaying -- on a physically existing surface or otherwise -- a two-dimensional image.)

The image projected in FIG. 2 onto display surface 210 is that of an animated, virtual "solar system" 270 including a virtual sun 270A around which is orbiting a virtual planet 270B with its own orbiting virtual moon 270C. (To assist in visualizing this image, dotted-line orbital paths 270D and 270E are shown in FIG. 2A. These paths, however, do not form part of the displayed image.) Sun image 270A has been situated by the computer's data base arbitrarily at an origin (0,0,0) in the virtual world coordinate system. FIG. 2 thus shows solar system 270 to be "behind" display surface 210 although, in fact, the solar system is virtual and does not actually exist in the real world (behind the screen or otherwise).

The present invention has the capability of displaying images, such as solar system 270, on display surface 210 in such a manner that a person situated in the real world with the display surface 210, whose eyepoint in FIG. 2 is at any of a plurality of at least two positions reasonably in front of the surface (even if severely off-axis from the surface), will see a heightened illusion of depth and three-dimensionality in the displayed image. Although these objects are shown in FIG. 2 as being placed in the virtual space so that they will appear to be positioned behind display surface 210, the invention (as more fully discussed below) allows objects to be placed -- and perceived to be -- in front of the display surface.

All of this is accomplished, in accordance with an aspect of the present invention shown in FIG. 2, by first determining the current position of the eyepoint of a guest viewing an image on display surface 210 and converting that eyepoint position into a corresponding position in the virtual world coordinate system. For example, if the guest is standing at a first eyepoint position identified in FIG. 2 as EP, data indicative of the coordinates of that position (a,b,c) are obtained and converted -- in accordance with a predetermined relationship between the real and virtual world coordinate systems -- to corresponding virtual world coordinate position $(V_X, V_Y, V_Z)$. On the other hand, if the guest moves to a second position in the real world denoted in FIG. 2 as eyepoint position EP', data indicative of the coordinates (a',b',c') of that position are obtained and converted to a virtual world coordinate position $(V_X', V_Y', V_Z')$. The position in the real world of that portion of display surface 210 bounding the actual displayed image is also determined.

Using the positions of the eyepoint and the position of the display, the computer graphic system defines and executes two image transformations. One transformation transforms the coordinates of points on objects in each image being displayed to cause the center of projection of those points -- and, hence, the center of projection of the image -- to be at a position in the virtual space that, by virtue of the defined relationship between the virtual and real-world coordinate systems, corresponds to a position substantially coincident with (within an acceptable vicinity of) the real-world position of an associated guest eyepoint. This is illustratively shown in FIG. 2 by ray traces 230A and 230B, which respectively connect a point 290 on the surface of sun 270A to eyepoints EP and EP'.

The second transformation transforms the three-dimensional data representing the virtual object to map, for each of the plurality of eyepoints, image 270 onto a portion of a view surface that -- in this particular example -- is positioned in the virtual world in substantial scaled coincidence with a position corresponding to the position of that portion of display surface 210 in the real world forming a "virtual window" or display into the virtual world. By "substantial coincidence," it is meant that a portion of view surface 280D (shown in FIG. 2 as being in the same place as display 210) is computed and positioned in the virtual world so that it is substantially superimposed on that portion of screen 210 forming the display in the real world. By "scaled," as further discussed below, it is meant that there is a relationship between a given distance in the real world to a corresponding given distance in the virtual world.

FIG. 2 shows that these two transformations cause the field of view into the virtual world (relative to each center of projection) to be in substantially the same direction as, and to subtend substantially the same solid angle as, the field of view subtended by the displayed image of the virtual world relative to each corresponding eyepoint. Thus, for eyepoint EP, these transformations cause a field of view associated with that eyepoint to have an apex at EP and left and right clipping planes 280B and 280C. The field of view is clipped by far clipping plane 280A. For eyepoint position EP', however, FIG. 2 shows that the transformation causes a field of view for a different associated image to be defined having an apex at EP', and left and right clipping planes 280BB and 280CC (the far clipping plane associated with this field of view is not shown in the figure).

As a consequence of the foregoing transformations, points within image 270 are mathematically projected by the computer graphic system for display at positions on display surface 210 where ray traces connecting those points to the determined eyepoint intersect the view surface. This is illustrated in FIG. 2, which shows how point 290 on sun 270A is rendered for display on view plane 280D and display screen 210 at point 290A when the display is viewed from eyepoint EP, but at point 290B when the display is viewed from position EP'.

By computing in this fashion updated images of solar system 270 for display onto screen 210 as a function of changed positions in the real world of the guest's eyepoint relative to the screen, views of the solar system (and any other objects drawn by the computer graphics system) will be displayed on screen 210 in proper three-dimensional perspective at each eyepoint. Because different perspective views of the computer-generated images will be displayed on display surface 210 as the guest's eyepoint moves from position to position relative to the screen, motion parallax in the images will enable the guest to see behind and around imaged objects by moving from one position to another. This combination of effects contributes to creating for the guest a heightened perception or illusion of three-dimensionality in the displayed images.

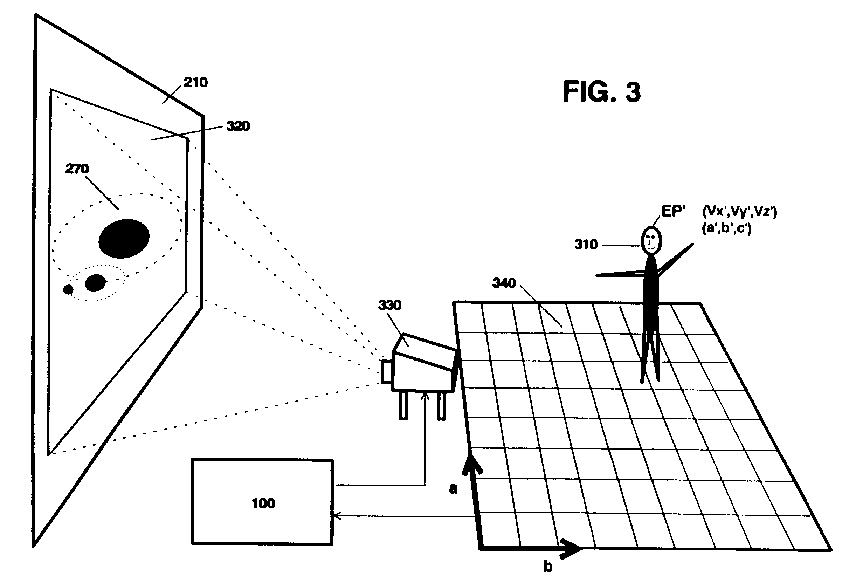

FIG. 3 is a perspective drawing of one exemplary environment in which the present invention may be used to display for an observer a scene of a virtual world. A room of a dark ride has a display surface 210 (e.g., a projection screen) on which an image of solar system 270 is displayed by conventional video projector 330. (Note that in this example the displayed image 320, and the objects in the image, fill only a portion of the screen. The displayed image, as bounded by its periphery, thus subtends a field of view relative to the guest's eyepoint that is contained within the field of view relative to that eyepoint subtended by the display surface as bounded by its periphery.) The images displayed on screen 210 are created from a three-dimensional data base by computer graphics system 100 shown coupled to the projector. A guest 310 is viewing the display from viewpoint EP' (also shown in FIG. 2) located, in sensor coordinates indicated by grid 340 on the floor of the room, at position (a',b',c') (the value of c' is assumed to be a known, constant value indicative of the invariant (in this example) height above the floor of the guest's eyes).

Computer 100 is coupled to receive, in a conventional fashion through the computer's parallel or serial port, data indicative of the approximate real-world position of the eyepoint EP of guest 310 as the guest moves from position to position relative to the screen on grid 340 (these data can indicate the position directly, or indirectly by providing information (e.g., the identity of a sensor positioned at a known location) from which the approximate actual position of the guest can be determined by the computer). Guest 310 is free to move randomly from position to position anywhere on the grid. At a particular determined eyepoint position the invention generates and displays for the guest an image associated with that position. If the guest's eyepoint is determined to have changed relative to the display surface to a new eyepoint position, a new and different image appropriate to the new position is generated by computer 100 and displayed on screen 210. The objects in these images will each subtend a field of view relative to the guest's associated eyepoint as the virtual object does in the virtual world relative to a center of projection corresponding to the eyepoint. As a result, each image will be in proper three-dimensional perspective with respect to the particular associated determined eyepoint position for which the image was generated. As the guest moves around the room, the different images will present accurate motion parallax cues in addition to accurate perspective cues. These cues will create for the guest an illusion of depth and three-dimensionality in the displayed images, even though each image itself is only two-dimensional.

In the exemplary embodiment of FIG. 3, computer 100 is a Silicon Graphics IRIS-4D Indigo work station, programmed in accordance with the invention in conjunction with the Graphics Library image modeling software available from Silicon Graphics, Inc. Persons skilled in the art will recognize, of course, that computer 100 can be substantially any other make or model of computer system provided it is powerful enough to be able, when programmed in accordance with principles of the present invention, to render different images for display to a viewer in "real time" (as the viewer moves from position to position in front of the display). Similarly, substantially any three-dimensional image generating software can be used with program computer 100, provided that the library permits transformations to be implemented in accordance with the principles of the invention to be further described, below. Thus, while an-exemplary embodiment of the invention is described herein (and, particularly, below) in terms of defining view surfaces, clipping planes and a viewing frustum with the IRIS computer, other systems that do not rely on such constructs to render images may as well be used.

Because the images of virtual objects are presented by the invention in proper three-dimensional perspective at different eyepoint positions relative to the surface on which the images are displayed, and because there exists a relationship between positions in the real world and positions in the virtual world, the invention is capable of achieving a variety of unique illusions. One of these illusions is that virtual objects in the virtual world, and real objects in the real world, can be made to appear -- to an observer moving between different eyepoints -- to co-exist in the same space or world.

More particularly, a displayed virtual object and a real-world prop or set can be "dimensionally extended" into one another -- and stay dimensionally extended -- as the observer moves between a plurality of eyepoint positions relative to the display. As used herein, the term "dimensional extension" is defined to mean that an object and an image of an object appear, to an observer viewing the object and the image, to recede in the distance to a common vanishing point. Dimensional extension causes virtual and real-world objects to appear to merge into one another and to visually behave -- to the observer -- in a substantially identical manner as the observer's eyepoint moves relative to the display.

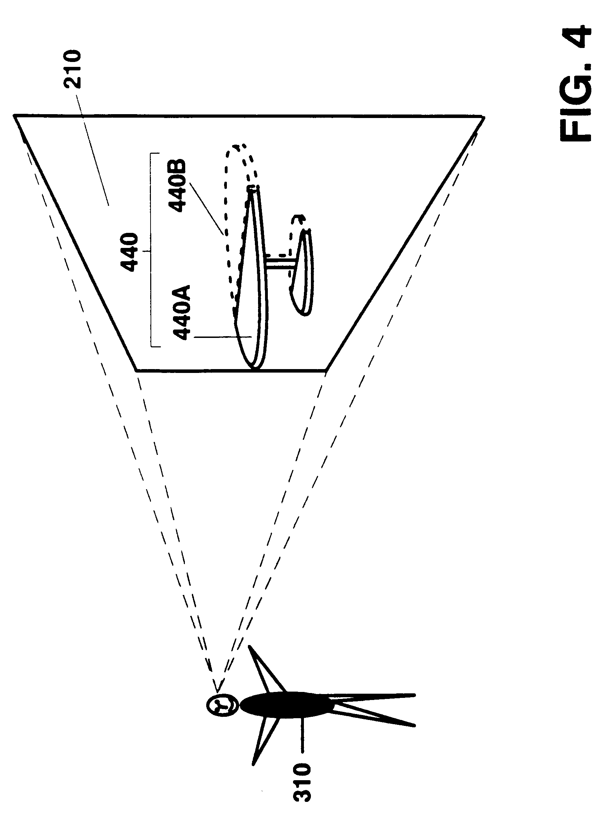

FIG. 4 shows an example of this dimensional extension. In FIG. 4, guest 310 is shown standing in front of projection screen 210. A real-world prop 440A (half of table 440), is placed against screen 210 on which is displayed, by a rear projector (not shown), a computer-generated image 440B (shown with dashed lines) of a virtual prop representing the other half of table 440. If the virtual prop is accurately modeled, colored, textured and lit to appear like the other half of real table 440A, and if real table 440A is accurately registered with image 440B of the virtual prop, then the real-world half table 440A and the image 440B of the virtual half table will visually merge --and stay visually merged -- as the guest's eyepoint moves from position to position Thus, as guest 310 moves from position to position relative to screen 210, the observer will perceive an illusion of a single, complete table extending into the computer generated world (and vice versa). This illusion is produced in substantial part because the image seen by the guest of the virtual table, and the visage seen of the real table, behave alike as the observer moves in front of the display. Both appear to the observer to recede in the distance to a common perspective vanishing point, and to exhibit common motion parallax cues relative to one another (and to other nearby real or virtual objects), as the guest moves between different positions relative to the screen.

A dimensional extension effect also can be achieved by the invention without placing a real-world prop up against the display. For example, consider a ride track passing in front of a display and then turning, so that part of the track is occluded by the display. If it is necessary or desired that the observer "see" the part of the track that is hidden, an image of that part of the track can be modeled and placed at a virtual world position for presentation on the display such that -- as the observer approaches the display -- the displayed image of the track will be seen dimensionally extending into and merging with the real track.

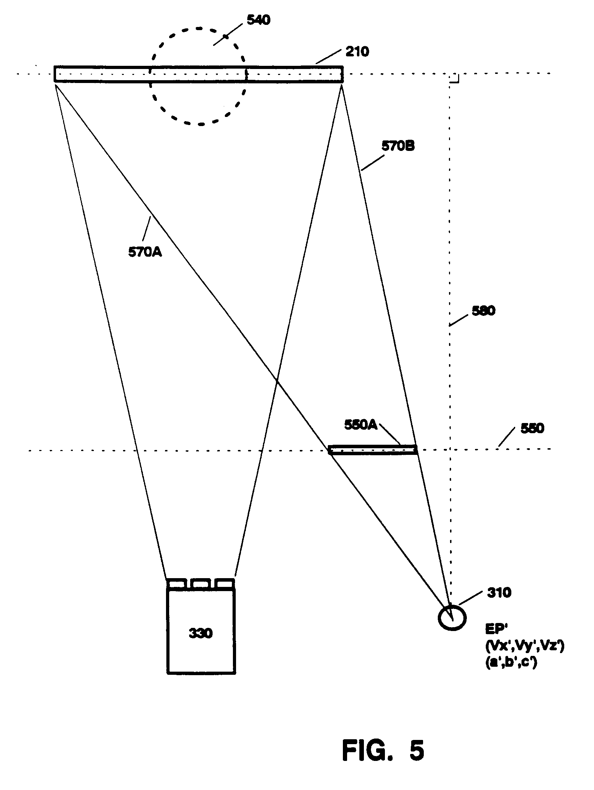

Still another way for a virtual object to appear to "extend" into the real world beyond the plane of a display, without use of a physical prop to extend the image, is to locate at least part of the virtual object at a position in the virtual space corresponding to a desired real-world position in front of the display. FIG. 5 illustrates one exemplary way to do this.

FIG. 5 is a plan view of a ray-trace diagram in the virtual world showing a guest 310 standing in front of and off-axis from screen 210, in the vicinity of a virtual world position $(V_X', V_Y', V_Z')$ corresponding to a position in the real world approximately coincident with eyepoint position EP'. The virtual object being displayed on at least a portion of screen 210 (shown in FIG. 5 at its corresponding virtual world position) is table 540 (shown by dashed lines) which has been modeled to be at a position in the virtual space corresponding to a real-world position that places part of the table in front of and part behind the real world position of the display. In order for such an image to be properly displayed, the computer is programmed to place a near clipping plane 550 between the nearest point on the object desired to be seen and the eyepoint. In addition, the perimeter clipping planes defining the periphery of the field of view into the virtual world relative to a center of position corresponding to the position of an associated eyepoint (i.e., for a four-sided field of view, the bottom, top and two side clipping planes) are positioned in the virtual world to be registered, respectively, with a periphery in the virtual world corresponding to the periphery (i.e., for a four-sided display, the bottom, top and two sides or edges) of the image generated for display onto the display surface. (Two of these perimeter clipping planes -- left clipping plane 570A and right clipping plane 570B -- are shown in FIG. 5. These are shown registered to the edge of the display surface 210 because, in FIG. 5, it is assumed that the generated image fills the display surface. If the generated image as displayed filled only a portion of the display surface, then the position of the periphery of that image as generated by the projector (ignoring any post-projection cropping or vignetting of the projected image intended to limit the displayed field of view relative to what was in fact generated and projected) would be used to register the clipping planes.) Because in the IRIS computer the near clipping plane and view surface coincide, the computer will transform the data representing the table by projecting, in the direction of the center of projection, points on the table contained within the field of view onto view surface 550A (shown coincident in FIG. 5 with clipping plane 550, and subtending the field of view). An image based on these transformed data then is created and presented -- such as by projector 330 positioned substantially centered on and normal to the display to avoid adding distortions to the image -- on the display on screen 210.

The net of this process, shown in FIG. 5 and described above, is that images will be displayed on screen 210 each having a center of projection substantially coincident with an associated position of the observer's eyepoint and each in proper perspective for that eyepoint. As the observer moves relative to the screen, a plurality of such images will present, as well, accurate motion parallax cues in the displayed scene and an illusion of three-dimensionality will be created. Objects placed at positions in virtual world coordinates corresponding to real-world coordinates in front of display 210 will be perceived to be in front of the display (provided that those objects are not placed in front of the near clipping plane or allowed to fall outside of the field of view). Similarly, objects placed at virtual world positions corresponding to real world positions at or behind the real-world positions of screen 210 will be perceived to be at those positions.

From the foregoing discussion, it should be apparent that the invention as shown in and described with respect to FIG. 2 is but a specific case of a more general approach to implementing the invention as shown in FIG. 5. Thus, while the invention can be implemented as in FIG. 2 by forcing the view plane in the virtual world to be positioned so as to be substantially superimposed on the display in the real world, such superposition in fact is not necessary. Assuming that the center of projection of an image has been caused to substantially coincide with the eyepoint for the image as heretofore discussed, an exemplary way in which to implement the invention involves (1) defining a field of view into the virtual world, relative to a center of projection corresponding to the real-world position of an associated eyepoint, to be in substantially the same direction as and to subtend a solid angle as great as or greater than the respective direction of and solid angle encompassed by the field of view subtended by the periphery of the displayed image relative to the eyepoint, and (2) mathematically projecting virtual objects, or portions thereof, contained within the virtual world field of view toward the center of projection and onto a view surface subtending that field of view. The arrangement of FIG. 2 meets these limitations, for the particular case in which the view surface and display have been chosen to coincide. FIG. 5 also meets these limitations, where the view surface 550A is placed in front of the display plane. Although not shown in FIGS. 2 or 5, it will be apparent that a view surface could as well be defined to be behind screen 210 still in accordance with the invention (although doing so will require special attention to the computer graphic system's Z-buffer in order to ensure correct functioning of overlap and hidden surface removal algorithms).

The above examples have discussed the invention in the context of an image displayed as if projected onto a screen from a position on a line extending substantially from the center of and perpendicular to the plane of the screen. In such circumstances, the view surface should be positioned in the virtual world so as to remain substantially parallel to the display screen as the center of projection (observer's eyepoint) moves relative to the screen. If the image is projected onto the screen from a position substantially off of this line (either vertically or horizontally, or both), then the physical process of displaying the image can introduce a distortion causing the fields of view in the virtual and real worlds to become significantly different. This difference can disrupt the illusion of three-dimensionality created by the images. In such a case, the view surface (e.g., surface 550A in FIG. 5) can be re-oriented from being substantially parallel to the display to introduce a compensating distortion. More particularly, the view surface should preferably be re-oriented -- in a direction to compensate for the distortion -- by a vertical and horizontal angle substantially equal to the respective vertical and horizontal angles between a ray trace connecting the center of the projector to the center of the screen and a normal to the screen at that point.

The foregoing examples also have discussed the invention in the context of a person walking or otherwise moving at a single elevation along a random trajectory in front of a display. It will, of course, be appreciated by those skilled in the art that the invention may be used as well to display images on screen 210 for guests that might be passing the screen in a ride car travelling along a defined trajectory, or passing through different elevations. Thus, the present invention may be used with roller coaster-type rides or substantially any other type of ride in which a realistically three-dimensional scene is desired to be displayed. However the generated image is viewed, it is necessary to obtain in some manner (directly or indirectly) the approximate current position of a guest's eyepoint relative to the display in order to generate an appropriate image for that position. In the case of presenting images to one or more guests sitting together in a ride car, it typically would suffice to obtain a single position within a vicinity of the guest or guests (e.g., in the center of the car) that is approximately representative of the eyepoints of the one or more guest eyepoints.

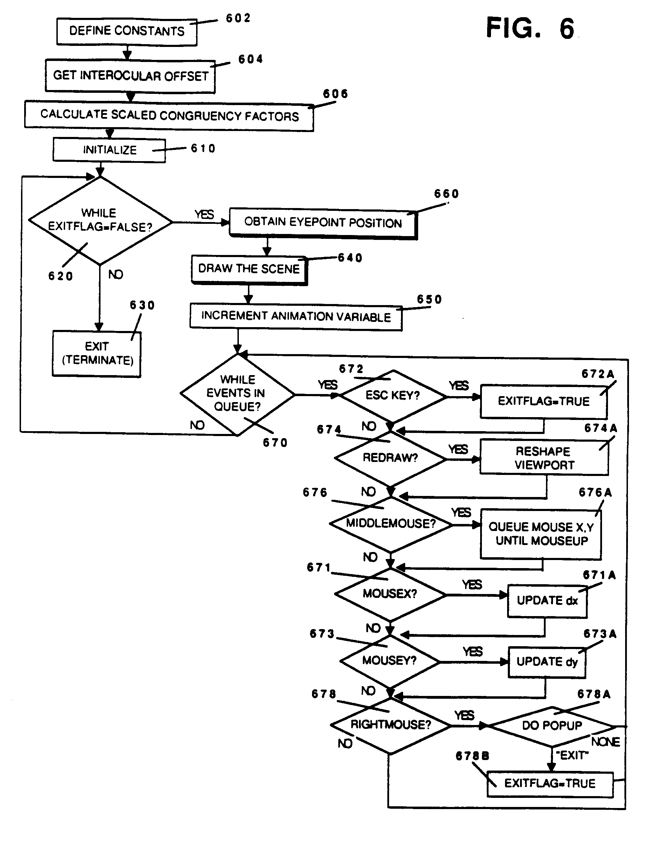

FIGS. 6-8 are flow charts of an exemplary software routine, written in the C programming language, that may be used to program a computer graphics system (such as the IRIS work station) in accordance with the present invention. In the discussion of FIGS. 6-8 to follow, familiarity is assumed of the Silicon Graphics IRIS work station, as well as of the features and functions provided by the GL graphics software library and other software libraries with which the exemplary program is used. More complete information concerning GL may be obtained from the Graphics Library Programming Guide for the IRIS-4D Series of computers, Document Version 2.0 (Document No. 007-1210-030), April 1991, published by Silicon Graphics, Inc.

The scenario for the program of FIGS. 6-8 is that of a guest standing in front of a flat screen, as generally illustrated in FIGS. 2 and 3, on which is projected (from an on-axis position) an image of what appears to be a view through a magic window of a scene of a three-dimensional virtual space modeled by a three-dimensional data base maintained by the computer graphics system. The scene could be of solar system 270, cube 160, or substantially any other object or group of objects, static or animated, capable of being modeled and rendered by the computer graphics system. The program of FIGS. 6-8 is applicable, as well, to situations other than the particular one shown in FIGS. 2 and 3, such as a guest seated in a ride vehicle passing a display screen.

FIG. 6 shows an overall flow chart for the program. The flow chart assumes that the program first had included the Graphics Library, Device Library and Math Library software packages available from Silicon Graphics, Inc., as well as any desired three-dimensional data for shape primitives modeling objects to be displayed. These inclusions, accordingly, are not shown in FIG. 6.

Program execution begins in FIG. 6 at step 602, where the following constants are defined:

(a) vy__Real -- the elevation in the Y virtual world direction of a guest's eyepoint, measured in inches or other real-world unit of measurement (this is used if the elevation of the guest's eyepoint can be assumed, rather than actually obtained);

(b) near__to__DisplayZ__Real -- the offset distance measured in the real coordinate system between the image (on the display surface) and the near clipping plane if such an offset is desired to place images in front of a screen as shown in FIG. 5 (this distance, shown in FIG. 5 as the distance along display normal 580 between the planes defined by display 210 and view plane 550, can be chosen to place the clipping plane in front of, at or behind the display);

(c) fieldWidth__aSensor -- the width in the "a" direction of grid 340 expressed in terms of aSensor dimensional units;

(d) fieldDepth__bSensor -- (the depth in the "b" dimension of grid 340 expressed in terms of bSensor dimensional units;

(e) fieldWidth__Real -- the real-world width in the "a" direction of grid 340 measured in inches, feet or other real-world unit of measurement;

(f) fieldDepth__Real -- the real-world depth in the "b" direction of grid 340 measured in inches (or other real-world unit of measurement);

(g) fieldOffsetX__Real -- how far the sensor field (grid 340) is offset in the X direction from the center of the displayed image on display screen 210 (and, hence, from the origin of the world coordinate system), in inches or other real-world unit of measurement;

(h) field__to__DisplayZ__Real -- how far the sensor field (grid 340) is set back (offset) from the image on display screen 210 in the Z direction of the computer or world coordinate system, in inches (or other real-world unit of measurement);

(i) displayWidth__Real -- the width of the generated image on display screen 210 in the "a" direction, in inches or other real-world unit of measurement (ignoring any post-generation cropping of the field of view);

(j) displayHeight__Real -- the height of the generated image on display screen 210 in the "c" direction, in inches or other real-world unit of measurement (again, ignoring any post-generation cropping of the field of view);

(k) displayWidth__Virtual -- the width, in computer coordinates, of the view plane (this width defines how wide the virtual window is, and typically is aesthetically chosen to present a desired field view of the virtual space);

(l) displayDistZ__Virtual -- the position along the Z axis of the virtual world coordinate system, relative to the virtual world origin, at which the display surface is located; and

(m) dT -- a constant used to interpolate the data provided to the computer indicative of the position of a guest's position.

Following this, the program at step 604 optionally retrieves data indicative of an inter-ocular offset. This offset may be used if stereoscopic images -- one for each of two eyes -- are desired to be displayed in order to present simulated binocular perceptual cues. The inter-ocular offset represents how far the eyepoint for one of two eyes is spaced from the eyepoint for the other eye. The retrieved offset data is utilized to cause the center of projection of a pair of displayed images to be spaced from one another by the inter-ocular offset distance. In the program of FIG. 6, the retrieved data actually represents one-half of the inter-ocular offset. The eyepoint/center of projection for a first image to be associated with, e.g., a right eye is shifted right by half the interocular offset, and the eyepoint/center of projection for a second image to be associated with the left eye is shifted left by the same offset. By generating and displaying the two images sufficiently close in time to one another (e.g., a field-time apart) so that they are perceived by the observer to be displayed simultaneously, and causing each image to be substantially seen only by the eye with which the image is associated (using, e.g., eyeglasses commercially available for this purpose that passively or actively substantially block each eye from seeing images intended for the other eye), the displayed images will include simulated binocular perceptual cues. The two images can be displayed in any of a number of conventional ways, such as by using two computers to synchronously display the separate images through one or two projectors or by using a single computer to display one image during even field times and the other image during odd field times.

The program next proceeds to step 606, where certain conversion factors are calculated (using the constants defined in step 602) that define the scaled relationship among the sensor, virtual-world and real-world coordinate systems. These factors include:

(n) Real__to__Virtual = displayWidth__Virtual/displayWidth__Real -- a scale factor to convert from real coordinates to virtual world coordinates (this factor can set the scaled relationship between the real and virtual worlds to be 1:1 (which, in many instances, maximizes the realism of the displayed images), or in some other desired ratio (e.g., 100:3 if it is desired that a movement of 3 feet in the real world be interpreted as a movement of 100 feet in the virtual world));

(o) fieldWidth__Virtual = fieldWidth__Real*Real__to__Virtual (the width-of grid 340 in virtual world coordinates);

(p) fieldDepth__Virtual = fieldDepth__Real*Real__to__Virtual (the depth of grid 340 in virtual world coordinates);

(q) fieldOffsetX__Virtual = fieldOffsetX__Real*Real__to__Virtual (the offset distance of grid 340 from display 210 in virtual world coordinates along the X direction);

(r) fieldOffsetZ__Virtual = (field__to__DisplayZ__Real*Real__t o__Virtual) + displayDistZ__Virtual (the offset distance in virtual world coordinates along the Z direction of grid 340 from display 210);

(s) aSensor__to__Virtual = fieldWidth__Virtual/fieldWidth__aSensor (a scale factor to express the current "a" position of the eyepoint in terms of virtual world X coordinates);

(t) bSensor__to__Virtual = fieldDepth__Virtual/fieldDepth__bSensor (a scale factor to express the current "b" position of the eyepoint in terms of virtual world Z coordinates);

(u) displayHeight__Virtual = displayHeight__Real*Real__to__Virtual (the height of the display expressed in virtual world coordinates); and

(v) near__to__displayZ__Virtual = near__to__DisplayZ__Real*R eal__to__Virtual (the distance measured along display normal 580 between the plane of display 210 and view plane 550 expressed in virtual world coordinates).

The program of FIG. 6 then advances to an initialization routine in block 610 to set up the hardware, to allocate memory, and to establish default values for global state attributes. Step 610 does a number of things. More particularly, the program at step 610 first sets up the display window to correspond with the current screen size in pixels. Then, the program places the computer's hardware in double buffer mode, which is a mode of operation in which a program addresses the frame buffer memory of the IRIS computer as if it were two buffers (a front and a back buffer) only one of which (the front buffer) is displayed at any one time. Double buffering is preferred to display smooth motion when animation is being used, but is not required (particularly if the scene to be displayed will include only static objects).

Next in block 610, the color mode of the system is defined to be RGBmode (which uses absolute red, green and blue values (0-255) in the form of vectors to define a color) and the shading mode is defined (e.g., flat or Gouraud shading may be used). The current transformation matrix mode is next defined, using the MMODE command of GL, to be MVIEWING. The MVIEWING mode of GL uses a dual matrix stack: Model/View and Projection. In this mode, modeling and viewing commands or calls pre-multiply the current Model/View matrix projection maintained by the IRIS computer. As will be apparent from the discussion to follow, the use of the MVIEWING mode of operation enables custom transformations to be implemented with the IRIS computer in accordance with the present invention.

Still in block 610, hidden surface removal algorithms are specified next (e.g., to be backface(TRUE) and zbuffer(TRUE)). Then, devices and values which will be loaded into the IRIS computer s event queue are defined (such as actions that are to occur upon pressing the ESC key, MOUSE buttons, etc.).

Finally in step 610, initialization of the COM2 serial port of the IRIS computer is accomplished in a conventional fashion by "open"ing it and setting parameters using well-known UNIX protocol definitions, and by "printing" any error messages if a problem is encountered. The COM2 port is set to operate at 9600 baud with 8-bit words, no parity and one stop bit.

After initialization has been completed, the program enters a While loop the top of which is at block 620. Within this loop, the computer draws images for display on screen 210 in response to data received that are indicative of the position, relative to the screen, of a guest observing the display. The computer stays in this While loop until commanded to exit (i.e., the variable EXITFLAG has been set to TRUE), at which point the program is terminated at block 630.

FIG. 6 shows that the While loop includes four main functional program blocks. These are: (1) Obtain The Eyepoint block 660; (2) Draw The Scene block 640; (3) Increment Animation Variable block 650; and (4) Events In Queue block 670. Each of these blocks is functionally described, in detail, below.

Block 660 is the point in the program where data indicative of the position of the guest's eyepoint are obtained from an external source (e.g., another processor) and converted into virtual world coordinates. These data may be produced by substantially any means using substantially any method.

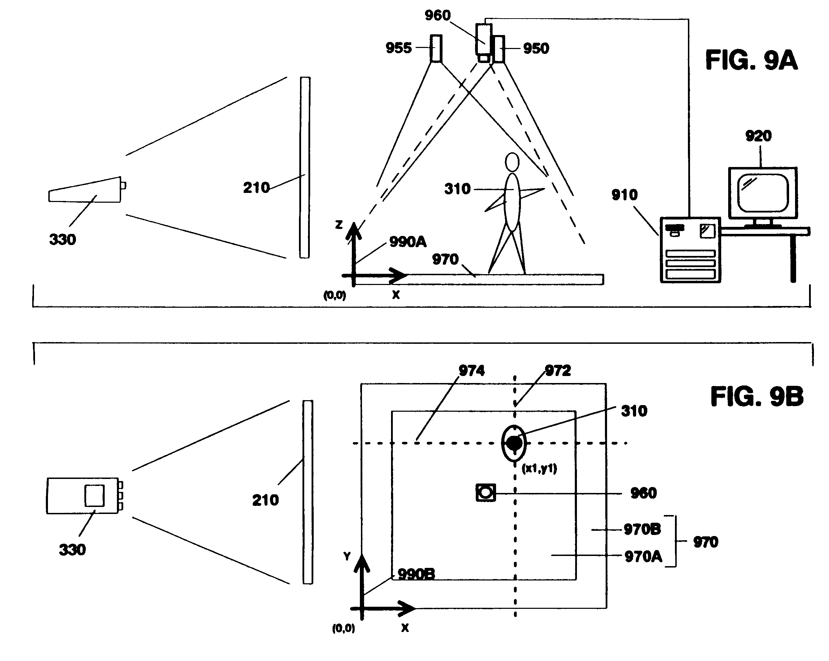

For example, a conventional pressure sensitive floor grid system can be used to transmit position data to computer 100 indicative of where a guest is standing. Alternatively, a conventional position sensor may be used of the type which includes a transceiver attached to the guest or other moving object for communicating position information back to a stationary source. An example of such a sensor is called "The Bird," manufactured by Ascension Technology Corp. of Colchester, Vermont. A third alternative is to use one or more conventional position sensors placed along a track to produce data indicative of the position of a ride vehicle and, hence, of the approximate eyepoint positions of guests riding in the vehicle. Yet another, and particularly advantageous, way of producing position data for a guest or ride vehicle moving along a random or predetermined trajectory is to use an imaging device viewing the space within which the person or ride vehicle is moving. An example of such a system is further described below with respect to FIGS. 9-12.

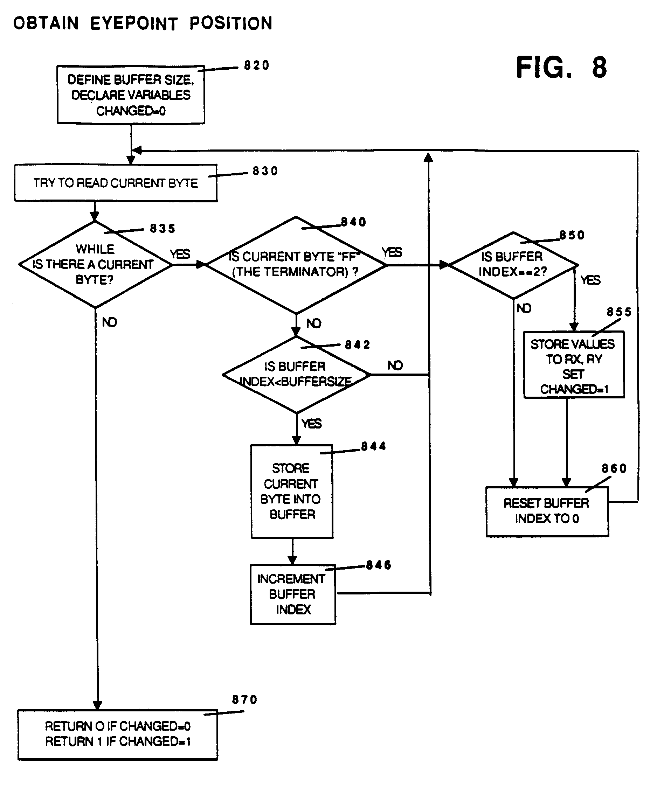

However the position data are produced, they are obtained by the program of FIG. 6 at step 660 via the computer's serial port (COM2) as detailed in the flow chart of FIG. 8. A coordinate pair of data (a,b), rather than a triplet (a,b,c), is obtained because the elevation of the guest's eyepoint relative to the projection screen is assumed to be a constant value.

In FIG. 8, at first step 820, a ten-byte input data buffer is defined, a buffer byte count variable called "INDEX" is initialized to zero, and the value of a variable called "CHANGED" is also initialized to zero. At block 830, the computer tries to read a current byte of data from the COM port. Assuming first that there is a byte to be read, the program branches via the "yes" path associated with step 835 to step 840.

13

At step 840, the value of an incoming byte is checked. If the value is "FF"(hex), the program flows to step 842 where the value of INDEX is checked to see if it is less than the size of the buffer. If not, the program loops back to the top of step 830. If the value of INDEX is less than the size of the buffer, the program from step 842 instead advances to step 844 where the byte read from the COM port is stored in the buffer at the position pointed to by the value of INDEX. Then, at step 846, the value of INDEX is incremented by one and the program flow loops back up to the top of step 830.

If at step 840 the current byte read out of the COM port is "FF", then the program branches to step 850 where the value of INDEX is checked to see if that value is two. If not, an error may have occurred so the program branches via the "no" path associated with step 850 to step 860 where INDEX is reset to zero. On the other hand, if at step 850 the value of INDEX is equal to two, this indicates that two bytes have been read into the buffer indicative of a changed position for the guest's eyepoint. Program flow thus proceeds under this scenario to step 855, where (1) the buffered data are assigned to the variables rx and ry, and (2) the value of CHANGED is set equal to one to indicate that the position of the guest s eyepoint has changed. Program flow then advances to step 860. Following step 860, the program loops back up to the top of step 830 to read another byte of data from the COM port.

If at step 830 there is no new data in the COM port to be read, the program at step 835 advances instead via the "no" path to step 870 where the routine returns to block 660 (FIG. 6) with a value of 0 or 1 corresponding to the value of the variable CHANGED.

When the routine of FIG. 8 returns to step 660, the values of rx and ry are assigned to variables "a" and "b" which respectively represent the current obtained eyepoint coordinate position in the "a" and "b" directions on grid 340 in whatever units of dimension were used to measure that position (e.g., inches, feet or, if the position of the eyepoint was determined by a pixel-based imaging device, pixel position). Then, still in step 660, these data are used to calculate the values of variables newa__Sensor and newb__Sensor, as follows:

(1)     newa__Sensor = newa__Sensor + (a-newa__Sensor)*dT; and

(2)     newb__Sensor = newb__Sensor + (b-newb__Sensor)*dT,

where dT, as previously discussed, is a defined interpolation constant (equal, in the described embodiment, to 1/6). Equations (1) and (2) will be seen to cause the final values of newa__Sensor and newb__Sensor to be calculated slowly, over the course of six passes through the program, following the receipt of new values for "a" and "b." This is intended to reduce the effect on the software of jitter and random movements on the part of a guest whose position is being monitored. The degree of filtering provided by equations (1) and (2) can be modified by selection of the value of dT (which may range between 0 and 1), or eliminated entirely by setting dT to one. If the position of a ride car is being monitored the trajectory and speed of which is known in advance, it is possible that no filtering would be required and the value of dT could be set to one.

When the data indicative of the guest's current position have been determined, the routine of FIG. 6 advances from step 660 to Draw The Scene step 640. This is the part of the routine where all images to be displayed are generated. A drawn scene is cleared and the entire scene is redrawn each time the Draw The Scene routine is called. Scenes are drawn as a function of the obtained data indicative of the real-world position (a,b,c) ("c" being assumed) of a guest viewing the scene and, optionally, also based on an offset (dx,dy), added to the (a,b) position, provided from a mouse. The mouse-derived offset data are optional, and need not be used. If included, offsets (dx,dy) have utility in testing the system.

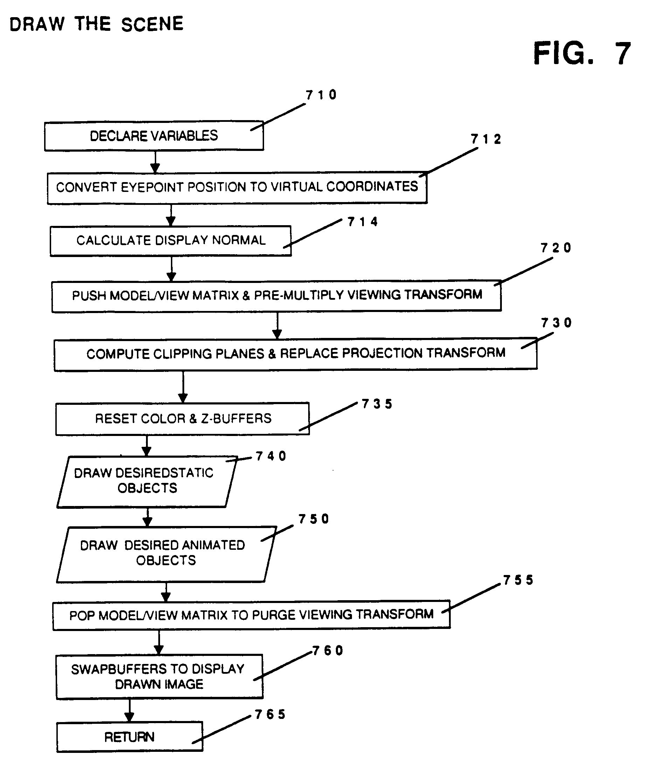

A more detailed flow chart of the Draw The Scene routine is illustrated in FIG. 7.

When first called, the routine of FIG. 7 first declares at step 710 variables used by the routine that are described below. Following this, step 712 converts the obtained data indicative of the guest's position into a corresponding position in the virtual world coordinate system. This is done by executing the following calculations:

(3)     $V_X = (newa\_aSensor*aSensor\_to\_Virtual) + fieldOffsetX\_Virtual;$

(4)     $V_Y = vy\_Real*Real\_to\_Virtual;$ and

(5)     $V_Z = (newb\_bSensor*bSensor\_to\_Virtual) + fieldOffsetZ\_Virtual.$

14

Equations (3) and (5), above, will be readily understood as multiplying the data indicative of the current obtained position of a person viewing the display by a scale factor that converts that real-world position into a corresponding virtual world position. In addition, an offset is added (again, in virtual world coordinates) representing how far the origin of the real-world position grid is spaced from the origin of the virtual world coordinate system. Equation (4) is simpler, because the eyepoint of the observer is assumed to be fixed at a known position (in real world coordinates) above the floor. Of course, if the elevation of the eyepoint cannot be assumed, then the value $V_Y$ would be calculated similarly to the way in which $V_X$ and $V_Z$ are calculated (using, of course, the appropriate variables representative of positions in the "c" and "Y" directions).

In addition, if a stereoscopic display is intended, the program at step 712 adds (or subtracts, depending whether a left-eye or right-eye image is being generated) the inter-ocular offset to the computed position of $V_X$ as follows:

(6)  $V_X = V_X + (Offset\_Real*Real\_to\_Virtual)$,

where Offset__Real is one-half the value of the interocular offset.

The particular values of the constants and variables defined in (a)-(v) and, hence, of the coefficients used in equations (1)-(6), will depend on such factors as the particular spacing and arrangement of the physical space in which the display screen and guest are situated, and the resolution of the grid or other coordinate system on which the real world coordinates are mapped (relative to the coordinate system of the computer-generated world). Because the invention can be used in environments other than the particular one illustrated in FIGS. 2 and 3 (e.g., a sensing grid might be used that is skewed relative to a display screen), formulas (1)-(6) are shown only for purposes of illustration and not limitation.

With the current virtual world position $(V_X, V_Y, V_Z)$ of the observer's eyepoint now determined, and with the position of the display also known, the program advances to step 714 to calculate the "display normal" for that position. The display normal is a ray trace, extending from the current position of the eyepoint, that intersects the plane of the actual display at a right angle. Two such display normals are illustratively shown in FIG. 2. For eyepoint EP, the display normal connecting that eyepoint to the plane coincident with view plane 210A is ray trace 260A. For eyepoint EP', the display normal is ray trace 260B.

The display normal is calculated in step 714 by defining a point $(P_X, P_Y, P_Z)$ to be at the following position:

(7)  $P_X = V_X$;

(8)  $P_Y = V_Y$; and

(9)  $P_Z = displayDistZ\_Virtual$.

As will be apparent from (7)-(9), the point $(P_X, P_Y, P_Z)$ is positioned where the display normal intersects the plane of the display.

The program now flows to step 720, where a copy of the current Model/View matrix existing on the top of the Model/View stack of the IRIS computer is pushed one position down into the stack in order to preserve the matrix as an identity matrix. This is done using a command ("PUSHMATRIX") provided by the GL software library.

Following this, and still at step 720, the current matrix on the top of the Model/View stack is pre-multiplied by a custom Model/View transformation matrix. This transformation is implemented in step 720 using a function provided by the GL graphics library called "LOOKAT." LOOKAT specifies, in computer coordinates, the position of an eyepoint and the position of a point (the "reference point") at which that eyepoint is "looking." The syntax for the LOOKAT command is:

LOOKAT $(V_X, V_Y, V_Z, P_X, P_Y, P_Z, twist)$, where: $V_X$, $V_Y$ and $V_Z$ specify the calculated position in virtual world coordinates of the eyepoint; $P_X$, $P_Y$ and $P_Z$ specify the calculated reference point in world coordinates toward which the eyepoint is "looking"; and "twist" measures the right-hand rotation of the eyepoint about the Z axis in the eye coordinate system. The value of twist in LOOKAT is set to zero, meaning that the eyepoint is aligned with (i.e., not rotated relative to) the display.

Execution of the LOOKAT command creates a Model/View transformation matrix that will force the eyepoint -- for wherever the eyepoint happens to be -- to always look down the display normal. LOOKAT thus establishes, for each eyepoint, a set of all possible view surfaces (in the form of "projection planes") for the projection transformation, each plane of the set being substantially parallel to the plane of the actual display. (If the image is being displayed on the screen from a projector that is sufficiently off axis from a normal intersecting the center of the screen such that undesirable distortions are introduced in the image, the reference point P specified by the LOOKAT command can be redefined at this step to re-orient the view surface to compensate for these distortions as previously described.)

Program flow now advances to step 730 of FIG. 7, where a custom Projection Transformation matrix is defined to replace whatever matrix is currently on the Projection Transformation stack. This custom Projection Transformation serves two purposes. First, the Projection Transformation registers the top, bottom and two side clipping planes of the image's viewing frustum in the virtual world (the apex or center of projection of which has been caused to coincide with the moving eyepoint) to the corresponding top, bottom and sides of the generated image as actually displayed in the real world (ignoring any post-generation cropping or vignetting of the image to restrict the generated field of view as actually displayed on the screen). The result is that a "virtual window," through which the guest views displayed images of the virtual world, is defined to be in scaled coincidence with the display in the real world.

Second, the Projection Transformation selects a view surface (from among the set of view planes established by the Model/View Transformation) onto which images are to be projected or mapped. The view surface is defined by setting the position of the near clipping plane because, as previously discussed, the near clipping plane and the view surface in the IRIS computer coincide by default. The position of the view surface at this step can be set to be coincident with the real-world position of the display as shown in FIG. 2, in front of the display as shown in FIG. 5, or behind the display as desired.

The custom Projection Transformation is defined by a function, provided by the GL software library, called "WINDOW." WINDOW shows a computer-generated world in perspective using a frustum defined in terms of distances, in virtual world coordinates relative to the position of the center of projection/eyepoint, to each of the left, right, bottom, top, near and far clipping planes of the frustum. The syntax for the WINDOW function is:

WINDOW (left, right, bottom, top, near, far), where the arguments "left," "right," "bottom," "top," "near" and "far" are the virtual world coordinates, in the appropriate direction relative to the eyepoint, defining the position of the corresponding clipping plane.

The Projection Transformation is implemented in step 730 by executing the WINDOW command using the following values for its arguments:

(10)   near = DispNearZ-near__to__DisplayZ__Virtual;

(11)   left = DispLeftX*(near/DispNearZ);

(12)   right = DispRightX*(near/DispNearZ);

(13)   bottom = DispBottomY*(near/DispNearZ);

(14)   top = DispTopY*(near/DispNearZ); and

(15)   far = near + 280,

where:

(16)   $DispLeftX = -((displayWidth\_\_Virtual/2.0) + V_X)$;

(17)   $DispRightX = (displayWidth\_\_Virtual/2.0)-V_X$;

(18)   $DispBottomY = -((displayHeight\_\_Virtual/2.0) + V_Y)$;

(19)   $DispTopY = (displayHeight\_\_Virtual/2.0)-V_Y$; and

(20)   $DispNearZ = V_Z-displayDistZ\_\_Virtual$.

As will be apparent from the foregoing equations, the quantity DispNearZ in equation (20) represents the distance in virtual coordinates along the display normal from the position in the virtual world corresponding to the obtained real-world eyepoint position to a virtual world plane positioned to correspond to the position in the real world of a plane of the display (i.e., the distance in FIG. 5, in virtual world coordinates, along display normal 580 from eyepoint 310 to the plane of display 210). The value for "far" in (15) is arbitrarily chosen to place the far clipping plane sufficiently distant (in the virtual world) so as not to clip the object image to be displayed.

If the constant near_to_DisplayZ_Virtual is chosen to be equal to zero, the computed value for near in equation (10) will cause the computed view plane to be coincident with the plane of display 210 (as in FIG. 2). If the value of near_to_DisplayZ_Virtual is positive, the near clipping/view plane will be placed in front of the display as in FIG. 5. Otherwise, if near_to_DisplayZ_Virtual is negative, the near clipping/view plane will be behind the display. In each case, however, the top, bottom and side clipping planes defining the periphery of the field of view into the virtual world -- and, hence, the corresponding edges of the near clipping/view plane -- will be registered for all determined eyepoints with the periphery (corresponding top, bottom and sides) of that part of display screen 210 defined to be the virtual window or display (i.e., the periphery of the displayed generated image).

The value of near_to_DisplayZ_Virtual can be set to zero if (1) no objects are desired to be positioned in front of display 210, or (2) objects are desired to be in front of the display and the computer system can separate the view and near clipping planes to place the clipping plane in front of the view plane. If the computer is incapable of separating the view and near clipping planes and it is desired to position a virtual object in front of display 210, then the constant near_to_DisplayZ_Virtual should be set to a value to extend the calculated position of the near clipping plane out in front of the position of the plane of display 210 sufficient to allow a virtual object to be placed in front of the display where desired (while still remaining within the field of view).

Following step 730, the program advances in FIG. 7 to step 735 where the "back" buffer of the IRIS computer is cleared, by resetting its color to black and initializing its associated Z-buffer for determining overlap of objects, so that new image can be drawn in the buffer for later display. Then, at step 740, one or more static objects populating the computer-generated virtual world are drawn using conventional and well-known drawing commands and techniques. Following this, the program steps to block 750 where conventional drawing commands and techniques are used to instance primitives defining one or more desired moving objects. In the case of the Silicon Graphics IRIS computer and GL software package, this is accomplished in a conventional manner well-known to persons skilled in the art by scaling, rotating and translating objects as desired using PUSHMATRIX and POPMATRIX commands.

It will, of course, be understood that the order of steps 740 and 750 is arbitrary. These steps can be performed in any order and any number of times, to execute substantially any number or type of drawing commands to model substantially any desired virtual world for display on screen 210.

When all desired drawing commands have been executed in steps 740 and 750, the program at step 755 executes a POPMATRIX command to delete the custom Viewing Transformation defined in step 720 from the Model/View stack and to restore the identity matrix. Then, at step 760, a GL command called SWAPBUFFERS is executed to cause the contents of the IRIS computer's "back" buffer (in which an entire frame has been rendered by the computer in accordance with the drawing commands issued in steps 740 and 750) to be visible as a scene displayed on the screen. Execution of the SWAPBUFFERS command ends the Draw The Scene routine of block 640 of FIG. 6, and the routine accordingly returns at step 765 to continue in FIG. 6 at step 650.

In Increment Animation Variable block 650 of FIG. 6, an integer TIME is incremented by a predetermined amount. This integer is used, in a conventional fashion, by module 750 of the Draw The Scene routine to draw objects (e.g., an orbiting planet) in various positions and orientations at particular moments in time. This might be done in step 750 using a GL command such as ROTATE(a,axis), where "a" specifies the angle of rotation and "axis" specifies the axis of rotation. In the case of the rendering of an orbiting planet, the angle of rotation might be defined to be 6*TIME, where TIME is a variable which is incremented in block 650 each time the program loops so that TIME increases in step-wise fashion (e.g., by 10) from 0 through some number (e.g., 3600), and then is reset to 0 to be incremented again. The TIME variable, therefore, is used for animation. If only a static scene is being displayed, the TIME variable would not be needed.

Following block 650, the program enters a While loop at block 670. In this part of the code, the computer manages events in an event queue to determine whether the system operator has done something with the computer's mouse or keyboard requiring some action. As shown in FIG. 6, any of the following events can place something in the queue: (1) the ESC key might have been pressed (block 672) to cause EXITFLAG to be set to TRUE (block 672A) so that the program will exit and shut down; (2) the REDRAW key might have been pressed (block 674) to cause the window and viewport to be resized (block 674A); (3) the middle mouse button may have been pushed (block 676) to queue mouse movement values in the X and Y directions (block 676A); (4)-(5) the mouse may have been moved in either the X (MOUSEX block 671) or Y (MOUSEY block 673) directions, requiring variables dx and dy (which represent relative mouse X and Y movements) to be updated with the relative amounts (blocks 671A and 673A); (6) the right mouse button (block 678) might have been pushed causing a screen menu to pop up (block 678A) offering the option to exit which, if chosen, causes EXITFLAG to be set to TRUE (block 678B).

When there are no more events in the queue to be processed, the While loop at 670 completes and program flow loops back up to the top of step 620.

The above-described software routines thus will be seen as operating to draw on projection screen 210 an image modeled from a three-dimensional computer data base that presents to a guest observing the displayed image a heightened illusion of depth and three-dimensionality. Images are rendered from the perspective of the real-world eyepoint of the guest relative to the display. As the guest moves in front of the screen, the center of projection of the image is calculated to substantially coincide with a virtual world position corresponding to the current position in the real world of the observer's eyepoint. Moreover, a field of view into the virtual world is calculated to subtend substantially the same solid angle as, and to be in substantially the same direction as, the field of view subtended by the display of the generated image for the current eyepoint.

Although, as mentioned above, substantially any means or method may be used to produce data indicative of a guest's eyepoint position for the routine of FIG. 8, a particularly advantage way of doing so uses a passive imaging system. An exemplary embodiment of such a system is described, below, with respect to FIGS. 9-12.

FIG. 9A generally shows a person 310 standing on a floor 970 (the Figure is not drawn to scale). It is preferable that the camera be mounted high enough so as to reduce parallax distortion at the edges of the field of view to a level which does not cause unacceptably large errors in the determined position of the person. If the camera in a given implementation of the invention cannot be mounted sufficiently far away, other techniques (later discussed) can be used to reduce parallax errors.

The floor's origin (0,0), in cartesian coordinates, is arbitrarily defined in FIG. 9A to be at the left as shown by Z-X axes 990A. The floor can, but need not be, within a room. The person is facing toward a screen 210 on which is rear-projected an image by a projector 330. This arrangement is intended to schematically represent what might be found in a dark ride of the type in which a computer-generated image of a set or vista is displayed on a screen. (It is to be pointed out, however, that screen 210 and projector 330 are shown in FIG. 9A for illustrative purposes only. Other types of displays also may be used.)

Also shown in FIG. 9A is an imaging device 960, shown suspended (e.g., from a ceiling (not shown)) at a known position above floor 970 such that it has a view of the floor including all places desired to be monitored for movement of person 310. Imaging device 960 may be substantially any conventional video camera or other imaging device capable of electronically capturing a view of a scene at subsequent moments in time. In FIG. 9A, imaging device 960 is a conventional video camera providing an NTSC-compatible output.

Next to imaging device 960 is a first source of illumination 950. Source 950 is used to light the scene below for imaging by imaging device 960. Source 950 may be any type of light that is capable of being "seen" by imaging device 960. In FIG. 9A, source 950 is an infra-red light source used so that person 310 will not notice the light emitted by the source. In order to "see" this light, and any scene illuminated by it, video camera 960 has been modified by removal of its infrared blocking filter. It will be appreciated by persons skilled in the art that substantially any type of light source might be used for source 950, depending on the circumstances and environment in which the present invention is desired to be used. Preferably, however, light source 950 should be mounted close to imaging device 960 in order to minimize cast shadows thrown by person 310 or other nearby objects which might interfere with or lessen the sensitivity of the system to identify and locate moving objects.

Also mounted near imaging device 960 is a second source of illumination 955. This light source is generally not used by the system in connection with determining the position of person 310, and is provided instead to provide ambient lighting to enable person 310 to see. Source 955 should preferably be of a different wavelength as compared to that of source 950. For example, to provide ambient illumination for person 310, second light source 955 might be visible or near ultra-violet light. If necessary, a filter can be fitted to imaging device 960 in order to filter out light from source 955 so that imaging device 960 "sees" substantially only light reflected off of objects that was emitted from illuminator 950.

Imaging device 960 is shown in FIG. 9A coupled, via cable 965, to an input of processor 910. In the exemplary embodiment illustrated in FIG. 9A, processor 910 is a conventional IBM PC-AT compatible, DOS-based personal computer having an associated monitor 920. The computer uses an 80386-DX microprocessor running at 33 MHz, has at least 512k bytes of random access memory, a hard drive (20-40 megabytes being more than sufficient), one or more removable storage media (e.g., 3-1/2 inch mini or 5-1/4 inch floppy disks), a serial I/O port, and a plurality of expansion slots into which expansion cards may be inserted (such as a digital video frame grabber card as described below). Of course, substantially any other computer system may be used for processor 910 provided that it is fast enough to perform the calculations needed to implement the invention in real time (as movement occurs). The functions performed by processor 910 could be incorporated into and performed by processor 100 (in FIG. 3).

FIG. 9B shows a top or plan view, as if looking down from the ceiling, of the space shown in FIG. 9A. Projector 330 and screen are again shown, as is floor 970. The origin (0,0) of floor 970 is shown in the lower left-hand corner of the floor, this time by X-Y axes 990B. Person 310 is shown positioned on floor 970 in FIG. 9B at the coordinate position $(X_1,Y_1)$ (as indicated by dotted-line coordinate extensions 972 and 974).

FIG. 9B shows that the floor on which person 310 is standing is comprised, generally, of two sections. Section 970A is called the "active" sensing region and section 970B is called the "passive" sensing region. The present invention can accurately determine and track, in real time, the X-Y position of an object, such as person 310, moving in either region 970A or 970B, because both regions fall comfortably within the field of view of imaging device 960. The separate regions are shown to illustrate one exemplary manner in which the area imaged by imaging device 960 can be segmented for one or another purpose. For instance, it might be desired that some event should occur whenever the invention determines that a person has entered the passive region, while another event should occur when the person has entered the active region.

Alternatively, the data produced by the present invention could be interpreted in some other manner such that the tracking region (floor 970) is effectively segmented into more or differently shaped regions. The present invention flexibly provides the capability of enabling a user to segment the tracking region into substantially any number of sub-regions desired (limited, of course, by the overall resolution of a particular system as actually implemented.)

Imaging device 960 is coupled to computer 910 by cable 965 connected to an NTSC video-in port of a digital frame grabber circuit inserted into one of the expansion slots of computer 910. This circuit may be any of a number of commercially available circuits designed to digitally capture fields of incoming video information. One example of such a commercially available circuit is the IVG-128 Video Acquisition and Display Board, manufactured by Datacube, Inc. of Peabody, Massachusetts 01690.

The IVG-128 frame grabber is a computer-controlled video frame store and graphics display system on a single PC interface card, containing about 192K bytes of on-board image memory. This memory is configured as 384 pixels (horizontal) by 512 pixels (vertical) by 8 bits per pixel. The board can digitize at a resolution of 384 pixels (horizontal) by 485 pixels (vertical), with each pixel represented by an 8-bit byte encoding a pixel intensity value indicative of 256 shades of grey or 256 color hues selected from a larger color palette. It is to be understood that, although the present invention is described below in an exemplary context of the frame grabber operating to encode pixel intensity values in terms of shades of grey, the invention could as well be implemented using pixel values encoding color or any other variable pixel attribute. As used herein, the term pixel "intensity" is intended to include within its definition any or all such attributes.

The frame grabber circuit of computer 910 can digitize into its video memory, and display, one frame of standard video in real time (e.g., thirty times per second). Computer 910 accesses the frame grabber's video display memory via a 64K page located in the computer's address space. Computer 910 also maintains within its memory a history buffer. This buffer, as further described below, stores a selected sub-sample of pixels of the last field of video information obtained by the frame grabber.

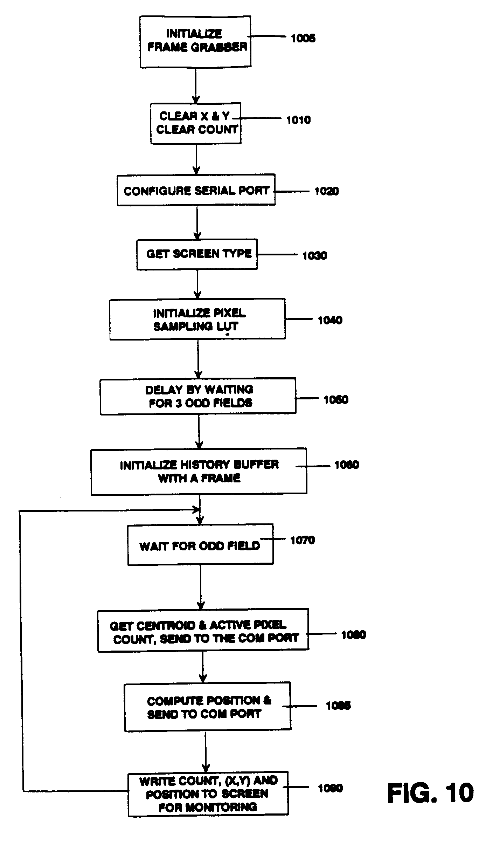

An exemplary flow chart of the main loop of a routine which may be used to program computer 910 is illustrated in FIG. 10. This flow chart represents the logical flow of low level video processing routines used by computer 910 to obtain video information received from imaging device 960, and to process that information to determine the location within an image captured by imaging device 960 of a centroid of a moving object. The program described by the flow chart is written in assembly language in order to obtain the speed necessary, with the particular computer used, to enable images to be processed and the centroid of a moving object to be calculated in real time.

In block 1005 of FIG. 10, computer 910 first initializes the frame grabber circuitry in a conventional manner. Then, in block 1010, computer 910 initializes to zero the coordinates X and Y of the location of the centroid to be computed of a moving object. In addition, the value of a variable COUNT (the purpose of which is described below) is also set to zero.

Program flow then advances to step 1020, where the routine initializes the computer's serial port (COM1) in a conventional fashion to enable computer 910 to transmit, to computer 100, data indicative of the positions of moving objects imaged by imaging device 960. The serial port is configured by the program to transmit 8-bit bytes of data at 9600 baud, no parity, 1 stop bit through a conventional RS-232 connection.

In the next step, at block 1030, the main program obtains the screen type of monitor 920 (e.g., VGA, Hercules, etc.) to enable the program to write directly to the screen's memory. This is accomplished by calling to the computer's BIOS and then appropriately setting, in conventional fashion, the screen's memory address and color attributes.

At block 1040, the program then initializes a pixel sampling video input look-up table ("ILUT") and three output look-up tables ("OLUTs") maintained by the frame grabber. The ILUT, which is comprised of high speed RAM, receives the output of an A/D converter used by the frame grabber to convert incoming analog video information into digital data. The OLUTs, in turn, receive the contents of image memory and drive high-speed D/A converters for driving the video inputs of RGB color monitors. The ILUT is capable of transforming any digital grey level value into any other eight bit value under program control. The ILUT may be used for any number of purposes, including binary thresholding (reducing the number of bits used to digitize the data), controlling the digital gain, offset and linearity, or performing some mathematical manipulation on incoming video data prior to storing the data. In the exemplary embodiment shown in the Figures, no transformation of incoming data occurs.

Following initialization of the look-up tables, the program at step 1050 waits for three odd fields of incoming video to pass to avoid start-up glitches. Then, at step 1060, the program initializes the history buffer with an array of pixel values sub-sampled from the most recent odd field of video received from imaging device 960 which had been digitized by and stored in the frame grabber. Program flow then proceeds to step 1070, where the program waits for the next odd field of video data to be received.

When the next odd field of video has been received in step 1070, program flow advances to step 1080 where a determination is made as to whether an object has moved within the field of view of imaging device 960 and, if so, where the centroid of the object is located within the image captured by imaging device 960. Additionally in step 1080, the data representing the location of the object's centroid are optionally sent to the COM port of computer 910 for transmission to another computer. (The data may be transmitted to another computer at this point in the routine, such as computer 100, if that other computer is being used to perform the function of step 1085, discussed below, of determining the position of the object associated with the centroid.)

After the X-Y location of the object's centroid in the image has been determined in step 1080, that location is used in step 1085 to determine the spatial position (a,b) of the object that produced the centroid. Step 1085 accomplishes this by first (and optionally) offsetting the origin of the image pixel coordinates (assumed to be in the top left corner of the image) to be on the centerline of the imaging optics. Assuming that the distance of the object from the imaging device along the centerline of the imaging optic is known or can be assumed (e.g., the object being tracked is moving on a floor beneath the imaging device), the position of the object is then calculated. If the optical configuration of the imaging device is known, this is achieved by calculating the coordinates of the intersection between (1) a line from the current X-Y image location of the centroid extending through the nodal point of the imaging optic, and (2) a plane perpendicular to the centerline of the imaging optic and located at the known distance along the centerline of that optic. The coordinates of this intersection point are calculated, using a similar triangles method, relative to an origin on the defined plane which corresponds to the origin on the imaging plane (e.g., the point on the plane through which the optic centerline passes) and along axes on the defined plane corresponding to each of the axes on the imaging plane. The coordinates may be calculated in any desired useful unit of measurement -- e.g., in terms of inches or feet, or in terms of a unit of measurement relative to the coordinate system of the virtual world of the objects being displayed.

If the configuration of the imaging device's optics are not known, the (a,b) position of the object in step 1085 may still be determined empirically. In such a case, the IMAGE TOTAL distances (lx,ly) in imaging device units (pixels) which constitute the imaging device's useable image along each of its axes are determined. These distances define the useable field of view of the imaging device along their respective axes and are taken as givens by the routine. Then, the ACTUAL TOTAL distances (Ax,Ay) in actual units (e.g., inches) along the defined plane (e.g., the floor) which subtend the field of view of the imaging device along each of each its axes are determined and also provided to the routine as given. The ACTUAL TOTAL distances may be determined empirically by measuring. Based on these two sets of givens, a scale conversion factor is defined for each axis equal to the ACTUAL TOTAL distance for that axis divided by the IMAGE TOTAL distance for that axis (Ax/lx and Ay/ly). These scale conversion factors then are used in step 485 to convert the X-Y pixel image location of the determined centroid to the (a,b) position in the real world of the object, by multiplying each component of the (X,Y) coordinate of the centroid by its respective scale conversion factor.

For example, suppose that computer 910 digitizes an image at a resolution of 170 pixels (X) by 200 pixels (Y). Suppose also that the image viewed by imaging device 960 (i.e., the dimensions of floor 170) has real-world dimensions of 14 feet (or 144 inches) in the X-direction by 18 feet (or 216 inches) in the Y-direction. Finally, suppose that the centroid is determined to be located within the image at pixel location (50,90). Based on this information, the real-world position (a,b) of an object on floor 970, in inches relative to the floor's origin 990B shown on FIG. 9B, may be calculated as follows:

(21)    $a = (50/120)^*144 = 60$ inches; and

(22)    $b = (90/200)^*216 = 97.2$ inches.

As earlier mentioned, if the imaging device cannot be placed sufficiently far away from the floor to reduce parallax distortion to an acceptably low level, the computed values of the object's position in (a,b) coordinates may include an unacceptably large error. The present invention can compensate for this error by adjusting the computed values of the position coordinates. This adjustment may be accomplished using a mathematical function which can readily be derived if the equations or characteristics defining the imaging device's optics are known. If the details of the imaging device's optics are not known, a correction function can be derived empirically by placing an object at a plurality of known positions within the field of view of the imaging device and comparing the known positions to corresponding computed positions to determine a deviation in each coordinate dimension for each position. Knowing these deviations, high-order polynomial equations could be fit to the deviations to generate mathematical functions (one for each dimension) to correct for the deviations. The computed position values (a,b) would then be modified by these mathematical functions to correct for the computational error. Alternatively, a lookup table could be used which stores corrected values of (a,b) for each or a selected plurality of computed (a,b) values to be substituted for the computed values. Or, the lookup table could store a correction factor to be added to or subtracted from a computed position. If the lookup table stores substitute position values or correction factors for a selected sub-set of all possible computed positions, entries in the lookup table may be interpolated for intermediate positions.

Finally in step 1085, the computed and optionally corrected (a,b) position of guest 310 is sent to the computer's COM port for transmission to computer 100.

After step 1085, the program at step 1090 displays on monitor 920 the (X,Y) coordinate values of the image location of the centroid determined in step 1080, the computed (a,b) coordinate values of the object's position determined in step 1085, and the value of a variable COUNT determined during step 1080 indicative of the number of active pixels (as discussed below). Step 1090 is included in the program for diagnostic purposes only, and is unnecessary in the illustrated embodiment to practice the invention.

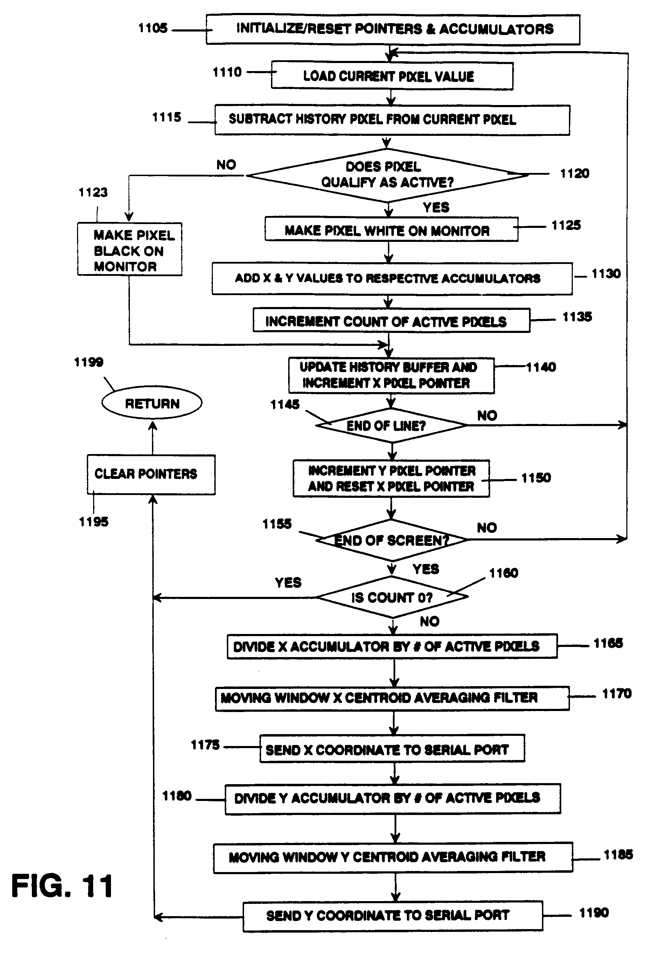

FIG. 11 shows a more detailed flow chart of an exemplary routine used by the main program at step 1080 to determine the coordinate image location of the centroid produced by an object moving within the field of view of imaging device 960.

At first step 1105 of FIG. 11, pointers and accumulators are cleared and initialised. Following this initialization step, the program at step 1110 loads the intensity value of the current pixel (in this first case, the byte for the first pixel of the first line of video) and, in step 1115, subtracts that value from the intensity value of the corresponding pixel for the preceding stored odd field of video retrieved from the history buffer.

In step 1120, a determination is made as to whether the values of the two corresponding pixels differ (either absolutely, or by a threshold amount). If one pixel value differs from the other by more than this amount, the pixel is classified as being "active" and the program proceeds downward to step 1125 where the color of the pixel is set to white (or other grey level or color) so that the pixel may optionally be displayed, for diagnostic purposes, as a visible dot on a monitor (not shown in the figures). Then, in step 1130, the (X,Y) coordinate values of the location of the active pixel within the image are separately added to corresponding X and Y sums respectively maintained in an X accumulator and a Y accumulator (each of which, as described above, had been initialized to zero). In step 1135, a variable COUNT (which maintains a running count of the number of active pixels that have been identified for the two fields of video being examined) is incremented by one. Program flow then advances to step 1140.

If, at step 1120, the pixel had been determined to be not active (i.e., the value of the byte representing the current pixel is equal to or within a predetermined difference of the corresponding pixel value stored in history buffer 1018), the program at step 1120 instead branches via the path labelled "no" to step 1123. At this step, the color or grey level of the pixel is set to black (or some other color different from white) so that the pixel does not display (or displays differently from displayed active pixels) on an optional monitor. Then, the program flows to step 1140.

At step 1140, the history buffer is overwritten with the current pixel value. At this point, the program has completed what needs to be done with respect to the current pixel and so the value of a pixel pointer is incremented by six (or some other value chosen to balance considerations of accuracy and through-put) to point to the next pixel in the same line of video stored in the frame grabber. In step 1145, a determination is made as to whether the X pointer is pointing past the end of the line of video. If it is not, the program loops via the path labelled "no" back up to step 1110 to repeat the above-described process to determine whether the next pixel is active. Otherwise, if the last pixel on a video line has been analyzed, the program drops down via the "yes" path to step 1150 to increment a Y pixel pointer by four (or, again, some other desired value) to point at the next desired line of the current field of video in the frame grabber. In step 1150, this incremented value of the Y pointer is examined to determine whether the program is past the last line of pixels in the image. If not, the program branches via the "no" path at step 1155 back up to step 1110. Otherwise, program flow advances down to step 1160.

By the time the above-described portion of the program illustrated in FIG. 11 reaches step 1160, the optional monitor will be displaying all pixels that were determined to be "active" -- i.e., changed (either absolutely, or beyond a predetermined threshold amount) -- between two different frames or fields of video captured at different moments in time by imaging device 960. These active pixels represent an object that has moved during the period of time that has elapsed between the two video fields that were examined (1/30 second).

Also by the time the program of FIG. 11 reaches step 1160, the total number of active pixels identified will be equal to the number stored in COUNT. In addition, the sum of the X coordinates of all active pixels will be stored in the X accumulator and the sum of the Y coordinates of all active pixels will be stored in the Y accumulator.

At step 1160, the program determines whether the value of COUNT is zero. If it is, no active pixels were identified between the two fields of video under scrutiny. The program, accordingly, branches via the path labelled "yes" to clear pointers and accumulators at step 1195 and to return at step 1199 so that execution of the main loop can continue at step 1085 of FIG. 10. If the value of COUNT at step 1160 is not zero, on the other hand, at least one active pixel exists identifying a moving object the position of which needs to be determined. In this case, the program advances to step 1165 to begin the process of identifying the centroid of the active pixels.

The centroid is a location $(X_C, Y_C)$ calculated as an average of the locations of all active pixels associated with the moving objects. It is the location of the centroid that ultimately is used in step 1085 (FIG. 10) to determine the position of objects moving within the field of view of imaging device 960.

The program first determines the current X-coordinate portion of the centroid. This is done by dividing in step 1165 the value in the X accumulator by the value or COUNT to produce a current value $X_C$ of the X-coordinate portion of the centroid. Next, in step 1170, this value is filtered by a moving window averaging filter over ten fields to reduce jitter in the value (the number ten being chosen to trade off smoothness versus delay in obtaining settled data). Filtering is accomplished by adding the current centroid value to a sum maintained of the last ten previously calculated values of $X_C$, subtracting the oldest of the original ten values of $X_C$ from the sum, and then dividing the resulting total by ten.

If the position of the moving object is to be calculated in step 1085 (FIG. 10) by another computer (such as computer 100), then the program from step 1170 next advances to optional step 1175 where the X coordinate of the calculated centroid is sent to that other computer via computer 910's COM port.

The program in steps 1180 and 1185 (and optional step 1190) repeats the foregoing process of determining a moving average for the Y-coordinate portion of the image location of the centroid $(Y_C)$. The program then advances to step 1195, where pointers are cleared. At step 1199, the program finally returns to continue execution of the main loop at step 1085.

Once the position of an object has been determined by the main loop as described above, the present invention will track the object's subsequent positions in real time. This is because new image data are processed by computer 910 every 1/30 second to compute repetitively the locations of new centroids as the object moves.

In the exemplary embodiment described above, only a single imaging device 960 is used to determine the position in one or two dimensions of guest 310 and the third dimension (elevation) of the guest's eyepoint was assumed. If it is desired to determine and track the position of a-moving guest 310 in three dimensions, this may be accomplished by using two imaging devices -- one located as shown in FIG. 9 as imaging device 960 looking down in the Z direction onto an X-Y plane, and another mounted to view the scene along another non-parallel axis (not shown in FIG. 8). Preferably, although not necessarily, the non-parallel axis should be substantially orthogonal to the axis along which imaging device 960 is viewing and substantially parallel to one of the axes defining the plane of floor 970 (e.g., the other imaging device could

22

be mounted on a wall looking in the X direction onto the Y-Z plane). The use of such an orthogonal viewing axis minimizes the number and complexity of calculations needed to be performed in order to compute the third ordinate of the object's position. The output of the second imaging device (e.g., also a video camera) would be coupled to a second-frame grabber card in computer 910, operating as described above to store images captured by the second video camera. Processor 910 would operate on the video pixel data stored by the second frame grabber, as discussed above with respect to steps 1005-1080 of FIG. 10 (and the steps of FIG. 11), to identify the coordinate locations (X,Z) of a centroid of active pixels in the images viewed by the second imaging device.

Having thus determined centroids of active pixels in two planes (e.g., the X-Y plane imaged by the camera shown in FIG. 9A and the X-Z plane imaged by another orthogonally mounted camera), the position (a,b,c) of the object in three-dimensional space may be determined by modifying step 1085 in FIG. 10 to operate to find the intersection in space of two lines defined by the point on the image and the nodal point of the lens for each imaging device. More particularly, step 1085 is changed to solve the following parametric equations for the lines in space defined by the point on the image and the point on the nodal point of the lens for each imaging device:

Imaging Device No. 1

$$(23) \quad X1 = Xn1 + (Xi1 - Xn1) * t1$$
$$(24) \quad Y1 = Yn1 + (Yi1 - Yn1) * t1$$
$$(25) \quad Z1 = Zn1 + (Zi1 - Zn1) * t1$$

Imaging Device No. 2

$$(26) \quad X2 = Xn2 + (Xi2 - Xn2) * t2$$
$$(27) \quad Y2 = Yn2 + (Yi2 - Yn2) * t2$$
$$(28) \quad Z2 = Zn2 + (Zi2 - Zn2) * t2,$$

where: (Xn1,Yn1,Zn1) and (Xn2,Yn2,Zn2) are the known points in space (in a,b,c coordinates) defining, respectively, the nodal points of the optics of the first and second imaging devices, and (Xi1,Yi1,Zi1) and (Xi2,Yi2,Zi2) are the known points in space (in a,b,c coordinates) defining, respectively, the locations on the camera sensor (or "film plane") of the points seen by the first and second imaging devices (these points are known by converting the pixel coordinate location of the imaging device to its actual spatial coordinate in the (a,b,c) coordinate system given the physical characteristics of the imaging device such as the focal length of the device's optic and the size of the sensor). These equations (23)-(28) are simultaneously solved in modified step 1085 for the constants t1 and t2, by setting a = X1 = X2 and b = Y1 = Y2. Then, the computed values of t1 and t2 are substituted back into equations (23) or (26) for the "a" coordinate, (24) or (27) for the "b" coordinate and (25) or (28) for the "c" coordinate, to solve the equations to obtain the actual (a,b,c) coordinates of the intersection point in space defining the three-dimensional position of the tracked object.

Moreover, if it is desired to track the position of more than one guest or other object (e.g., to control multiple imaging systems), this can be accomplished by assuming that a plurality of pixels characterizing the image of, for example, a person would ordinarily be spaced within a threshold distance of one another. Thus, the location of a centroid indicative of the position of the person can be calculated using only first active pixels determined to be within this threshold distance. Second active pixels in the captured images, assuming that they also are within a predetermined distance from one another, would be indicative of the position of another moving object (e.g., another person) and a second centroid for that object can be determined.

Various modifications may be made to the invention, as described above, without departing from the spirit and scope of the invention. For instance, although the invention has been described in the context of a stationary screen and a moving observer, the invention may as well be used with other arrangements. Thus, the observer could be stationary and the screen could be moving. Or, both the observer and the screen could be moving.

Moreover, persons skilled in the art will appreciate that the present invention can be used with more than one display screen to simultaneously or sequentially present images of more than one virtual space to an observer whose eyepoint moves in the real world between different positions relative to the screens. For example, two screens can be situated on adjacent walls of a room of a dark ride and meeting at a corner of the room. The first screen displays a view of a virtual space projected onto the screen by a first projector, and a second screen simultaneously displays another view of a virtual space (which may be generated from the same or a different data base) projected onto the screen by a second projector. Each screen displays a view of a virtual space generated as a function of the observer's eyepoint position in the real world relative to the screen. As the observer moves from position to position relative to the screens, each displayed image will be seen by the observer to be in proper three-dimensional perspective and to exhibit motion parallax. Moreover, by defining positions in each virtual space to have corresponding positions in the real world and by properly placing modeled objects in the virtual spaces, virtual objects positioned in each virtual space can be caused to dimensionally extend not only into the real world as previously discussed, but also into the other virtual space. Thus, for instance, a portion of a table can be modeled in one virtual space and another portion of the table can be modeled in the other virtual space, so that the observer in the real world will see a single, coherent image of a table in the corner of the room -- a portion imaged on the first display screen adjoining (where the two screens meet in the corner of the room) the other portion imaged on the second display screen. As the observer's eyepoint moves between different positions in the real world, the images of the table portions will dimensionally extend into one another (and, if desired, into a physical prop of still another portion of the table positioned in the real world) because each image (and the physical table portion, if provided) will recede to a common vanishing point for the different eyepoint positions. The two imaged table portions (and, if provided, the physical table portion) will present to the observer the appearance of a single, coherent table three-dimensionally "existing" in the real world in the corner of the room.

Similarly, different display surfaces can be used to sequentially present images of a plurality of virtual spaces (which, again, may be modeled from the same or from different data bases) to an observer whose eyepoint moves in the real world relative to the display surfaces. For instance, a first screen can present a view of a virtual space for positions of the observer from which a second screen is not yet visible. As the observer moves to another position from which the second screen is visible, that screen will present an image of a virtual space appropriate to that position.

In addition, it may not be necessary in all instances to repetitively produce position data for a moving eyepoint. In certain circumstances these data may be pre-calculated or assumed, particularly if the trajectory of an eyepoint is known and predetermined (such as would the case in a roller-coaster type ride). In such cases, it typically would suffice to sense when the roller coaster reaches a predetermined position on its track (or when a certain amount of time has passed from a starting point in time). This input could be used to commence the generation and display of images synchronized to substantially coincide with where an observer is calculated or assumed to be from moment to moment.

In situations involving a known eyepoint trajectory (such as typically would be the case for a ride vehicle), the images to be displayed for particular eyepoints can be generated for those eyepoints in advance and stored for subsequent replay using, e.g., video tape, video disc, motion picture projection, or any other device capable of displaying a desired sequence of images. As the ride vehicle reaches a predetermined eyepoint position, the image for that eyepoint would be played back. Playing back pre-calculated and pro-recorded images in this fashion synchronized in real time to predetermined eyepoint positions is a simpler and less expensive way to implement the invention, as compared to including an entire computer graphic system with every ride to repetitively create the same images on-the-fly in real time. Some finite array of positions would typically be sufficient to produce an acceptably dense series of images.

Nor is the present invention limited for use with physical display surfaces. The invention also can be used with conventional virtual reality systems, which use head-mounted displays, to present images of a first virtual space on a computer-generated virtual "surface" (such as a polygon) that has been positioned in its own second virtual space for viewing from the perspective of an eyepoint that moves from position to position within the second virtual world.

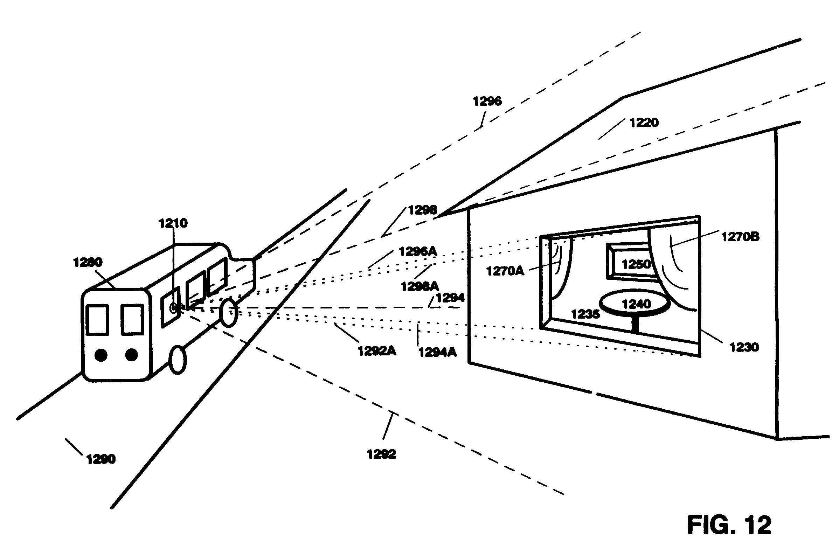

To visualize this, assume that an observer in the real world is viewing, with a head-mounted display, a virtual reality scene such as the one depicted in FIG. 12. The image in the head-mounted display includes a virtual house 1220 with a virtual window 1230 allowing a view of another image 1235 of a virtual room populated with a virtual table 1240, a virtual picture 1250, virtual curtains 1270A and 1270B, and other virtual objects not visible in the drawing any of which may be animated (e.g., someone walking around in the room, curtains blowing in the wind, etc.). The eyepoint of the observer is situated in a virtual "bus" 1280 moving down a virtual street 1290 passing by the house and window along a predetermined path. The view that the observer wearing the HMD has of the scene is from eyepoint 1210. That view is defined by a frustum whose apex is at the eyepoint and circumscribed by ray-traces 1292, 1294, 1296 and 1298. As these ray traces show, the observer wearing the HMD can see the entire house -- including its window and the objects in the room behind the window. (Note that the view the observer has of the scene depicted in FIG. 12 -- and the way it will appear in the HMD to that observer -- is not the way it appears to a person looking at the Figure.) A second set of ray traces 1292A, 1294A, 1296A and 1298A defines a second frustum, within the first frustum, which delimits a second field of view for eyepoint 1210 with respect to window 1230.

In a conventional system, an entire three-dimensional data base representing a model corresponding to the interior of the room, the view of which is circumscribed by window 1230, would have to be stored with the model data representing other portions of the virtual world (including house 1220) so that appropriate perspective images of the room could be generated in real time by the computer graphic system to "fill" window 1230 and be visible as eyepoint 1210 moves past the house. While this technique can accurately present a shifting perspective view through window 1230 into the room for the moving eyepoint, it does not work well to present such a view when certain advanced rendering methods such as ray tracing and radiosity are desired to be used to render the objects in the room. This is because advanced rendering techniques such as these are so computationally intensive that they cannot be accomplished in real time. In addition, this conventional technique requires that an entire model data base of the room must be maintained -- even of objects not seen from a particular view into the room -- in the event the objects may be visible from another view. This results, particularly for sophisticated virtual environments including many complicated objects, in a requirement for large amounts of memory and sophisticated data base management.

The present invention can be used to overcome these problems, particularly in cases in which positions of the eyepoint in the virtual world are predetermined or, if not absolutely predetermined, otherwise among a set of possible positions known beforehand. In accordance with this aspect of the invention, the virtual environment within the room of FIG. 12 (which may be considered a first virtual space) is modeled by three-dimensional data generated "off line" (i.e., at some time prior to the time the virtual world scene including the environment is to be generated and observed by a guest). This modeling can use the most sophisticated techniques known or yet to be created. Following this, and still off-line, the data representing the first virtual space are transformed to render a plurality of images of the first virtual space, each image being rendered for a different associated one of a plurality of different predetermined positions of eyepoint 1210 in the virtual world (which may be considered a second virtual space) from which the first virtual space will be viewed through window 1230. The transformation causes each image to have a center of projection that substantially coincides with the position of eyepoint 1210 associated with the image, and to be mapped onto a view plane positioned to be parallel with the plane defined by window 1230 of the house. Then, the plurality of individual images -- each of which will contain proper perspective and motion parallax perceptual cues for its particular associated eyepoint position -- are stored in the form of data representing a corresponding plurality of conventional two-dimensional computer graphic textures.

The stored images are later displayed to an observer by the computer graphic system in real time as the observer's eyepoint 1210 moves from position to position in the second virtual world. This is accomplished by causing the computer graphic system to determine when eyepoint 1210 (the position of which the computer graphic system necessarily knows) is at, or within an acceptable vicinity of, an eyepoint position associated with a stored image. For each such determined eyepoint position, the computer graphic system maps the texture corresponding to the associated image onto a virtual surface positioned by the computer in the virtual world to be substantially coincident with the display plane. At the present time computer graphic systems with sufficient texture capability to accomplish this mapping in real time are high-end systems typically used for military simulators. Such systems are commercially available from many companies, including: Ball Systems Engineering Division, of San Diego, California; Bolt, Branek, Newman of Redland, Washington; Division Ltd. of Bristol, England; Evans & Sutherland Computer Corporation ("E&S") of Salt Lake City, Utah; G.E. Aerospace Simulation and Control Systems Department of Daytona Beach, Florida; and Silicon Graphics, Inc. of Mountain View, California. Techniques for mapping and swapping textures on surfaces in real time are disclosed in commonly assigned co-pending patent application Serial No. _____ entitled "Method And Apparatus For Providing Enhanced Graphics In A Virtual World," filed July 10, 1992 in the names of William G. Redmann and Scott F. Watson, the disclosure of which is incorporated herein by reference.

Several methods are useful for determining eyepoint positions in the second virtual space relative to virtual surfaces on which texture images are mapped, and each has particular advantages. For example, in a first case in which the observer's eyepoint is anticipated to travel along a substantially known trajectory at a substantially known velocity profile, a temporal basis may be used. The eyepoint position is calculated for each increment of time (which may be the frame rate, or some integer multiple thereof) that the guest will spend on the trajectory and be able to view the images of the first virtual space. For each such position, a texture image is rendered and stored in such a way as to be associated with its temporally known position. During the observer s experience, at the place on the trajectory when the images of the first virtual world potentially may be viewed, the stored textures are recalled and made available to the computer graphics system rendering images of the second virtual space, with the appropriate texture being provided for each frame (or same integer multiple of frames). In this manner, as the observer moves from one eyepoint position to another in the second virtual space, for every eyepoint position possibly viewing the textures the most correct texture is used to cause the observer at each eyepoint position to perceive a view of the first virtual space in proper perspective.

A second case arises when the observer's eyepoint in the second virtual space is constrained to proceed along a substantially predetermined path, but the speed along that path may vary (or, possibly, stop or reverse). In this case, the distance along the path may be used as a basis for determining which texture is appropriate for the eyepoint's particular position. The total length of the path from which the texture images of the first virtual space may be viewed can be divided into segments, for each of which a single texture is rendered, preferably using the midpoint of the segment as the predetermined eyepoint position for the purposes of the texture rendering. These textures are preferably stored in a manner which allows their recall based on segment sequence since either the previous or successive texture image will be needed except in the case of high eyepoint speeds where some skipping through the sequence may occur. During the observer's experience, when the current eyepoint position lies along one of the segments, the texture image associated with that segment is recalled and used to render the view on the virtual surface of the second virtual space. The number of segments along the path should be selected to balance concerns of smoothness versus storage requirements for the textures. If too few segments are defined, the changes between consecutive ones of the textures will be significant and unaesthetic, potentially destroying the illusion of three-dimensionality which this invention can create. If some lower limit to the observer s speed can be determined or enforced, those limits may suggest a maximum number of segments (since the lower speed limit will indicate a maximum period during which the images of the first virtual space may be viewed.

In a third case, necessary if the observer is not constrained to a trajectory or path, a plurality of eyepoint positions from which the first virtual space may be viewed from the second virtual space is determined. The determined eyepoint positions may be uniformly distributed, but are preferably more densely distributed nearer objects in the first virtual space, since changes in parallax will be greatest in their proximity (this effect is also influential in the above-discussed second case). The above considerations of smoothness, minimum speed, and storage apply here as well. Texture images of the first virtual space are stored in a manner that permits their recall based on which determined eyepoint position was used to render them. One method to accomplish uses a stored table which records determined eyepoint positions in second virtual space coordinates and a reference or pointer to the texture image associated with the position. For regular or algorithmically distributed determined eyepoint positions, it may be more efficient to algorithmically determine a reference vector to the texture image. Given a current eyepoint position in the second virtual space, it is necessary to determine which of the determined eyepoint positions is most appropriate for the selection of texture images (i.e., which determined eyepoint is the current eyepoint in the vicinity of for purposes of mapping a texture image). One way to make this determination is to use a conventional binary space partitioning (BSP) algorithm. Once the BSP tree search has sufficiently narrowed the selection of previously determined eyepoints to a sufficiently small number, a range calculation is performed on each to determine which is nearest the actual current eyepoint. If the determined eyepoints are regularly or algorithmically distributed, it may be possible and more efficient to calculate directly which determined eyepoint and texture image are closest. The texture image associated with the nearest determined eyepoint is used to render the second virtual space for the current eyepoint.

Each image of the first virtual space produced by the foregoing technique is itself only two-dimensional, although displayed at a specific three-dimensional position within the second virtual space framed by window 1230. However, as the eyepoint moves from position to position relative to the position of the display framed by window in the second virtual world, a sequence of different images will be displayed -- each image of the sequence being associated with a different eyepoint position and calculated to present correct perspective and motion parallax cues to that position. As a consequence of these properly presented perceptual cues, the sequence of displayed images, synchronized to different associated eyepoint positions, will produce an illusion of three-dimensionality as the eyepoint 1210 moves past the window.

Note that the window 1230 (as distinguished from the surface on which texture is mapped) need not be a visible artifact or present at all. Further, the edge of the image 1235 need not be especially well-defined (e.g., the texture mapped onto a surface might include an alpha plane specifying at least a portion of the texture as visible and another portion as invisible or translucent, with the visible portion having an outline or boundary which differs from the boundary of the surface on which the texture is mapped). Even more, the location in the second virtual space of the surface on which the texture is mapped need not be fixed or otherwise stationary (e.g., either the eyepoint in the second virtual space or the textured surface, or both, can be moving relative to each other). For example, the textured surface in the second virtual space can represent a vehicle or other object which is moving within the second virtual world. Another technique would have the textured surface position itself relative to the observer's eyepoint (e.g. a textured image of hills in the distance can be mapped onto a surface actually only a short distance away, but holding a fixed range and azimuthal position with respect to the observer's current eyepoint so as to appear to be at an extreme distance from the eyepoint).

Moreover, there may be a plurality of virtual surfaces in the second virtual space, each Simultaneously presenting a view of a first virtual space to an observer moving between different eyepoint positions in the second virtual space. The images of the first virtual spaces texture-mapped onto the virtual surfaces may be of the same or of different first virtual spaces (each, however, is referred to as a "first" virtual space to distinguish the space from the second virtual space in which the observer's eyepoint is situated.) Thus, each first virtual space can be rendered based on the same or different object data bases. As with multiple images displayed on a plurality of real-world surfaces (as previously discussed), multiple images of first virtual spaces can be texture-mapped onto multiple virtual surfaces positioned in a second virtual space so that virtual objects in the first virtual spaces dimensionally extend into virtual objects positioned in the second virtual space, and/or into virtual objects positioned in the other first virtual space(s).

The present invention can also be used, in the context of texture-mapped images, to enhance an observer's perception of a model or scene rendered by a computer graphic system in the second virtual space. By arranging texture-mapped images of the first virtual space to be, relative to a particular eyepoint, substantially coincident with (i.e., in substantially the same place as) and substantially congruent with (i.e., of substantially the same size and shape as) an object modeled and rendered in the second virtual world, an image of a scene in a first virtual world --otherwise too complicated to render in real time in the second virtual world -- can be texture-mapped for a moving eyepoint onto a surface in the second virtual world as earlier described to enhance the perception of an object or objects previously or subsequently rendered in the second virtual world. For example, suppose in FIG. 12 that bus 1280, rather than passing house 1220, is instead heading to crash through window 1230. As the observer s eyepoint approaches the window, the image 1235 of the first virtual world in the window shows an appropriate perspective view for different ones of the observer's eyepoint positions of people fleeing within the room. As the eyepoint enters the room, the image of the first virtual world texture-mapped onto the virtual surface forming the window could be instantaneously replaced by a model of the same room now rendered in conventional fashion in the second virtual world to produce images of the room for an eyepoint that has now entered the room and may no longer be confined to a predetermined trajectory or other set of positions. The enhanced imagery of the first virtual world prior to the moment when the eyepoint enters the room will enhance the viewer's perception of the less detailed imagery possible when the room is modeled and rendered in conventional fashion in the second virtual world after the eyepoint enters the room.

It will be appreciated by those skilled in the art that the present invention can be practiced and implemented by other than the described embodiments, which are presented for purposes of illustration and not of limitation, and the present invention is limited only by the claims which follow:

## Claims

**1.** A method of sequentially displaying a plurality of images of a first virtual space containing at least one virtual object, the object being represented by three-dimensional object data and located at a position in the first virtual space, the images being displayed on a display surface having a display surface position in a second space for viewing by an observer from a plurality of eyepoints in the second space, each eyepoint associated with a different one of the plurality of images and having a different position relative to the position of the display surface, the method comprising the steps of:

defining a relationship between the first and second spaces so that positions in one space have corresponding positions in the other space;

for each respective one of the plurality of images, creating image data for the object by transforming the object data through a transformation with respect to a center of projection relative to which at least a portion of the object subtends a respective first field of view, the center of projection located in the first space at a position substantially coincident with a position corresponding to the position of the eyepoint in the second space associated with the image;

generating the plurality of images based on said image data; and

displaying the plurality of images on the display surface in the second space so that each respective image of the at least portion of the object subtends a respective second field of view relative to the eyepoint associated with the image; wherein

said transformation is chosen to cause, for each of the plurality of images, the respective first and

27

second fields of view to be substantially identical.

2. The method of claim 1, wherein said transforming step includes the step of:

projecting points on the object contained within the first field of view, towards the center of projection, onto a view surface subtending the first field of view; and

selecting a position for the view surface so as to cause said respective first and second fields of view to be substantially identical.

3. The method of claim 2, further comprising the step of:

positioning the view surface in the first space for each of the respective images to be substantially parallel to the display surface positioned in the second space.

4. The method of claim 2, wherein the display surface is substantially planar and the view surface is a view plane.

5. The method of claim 2, wherein the display surface is curved and the view surface is a view plane, the method further comprising the step of:

positioning the view plane in the first space to be substantially parallel to a plane positioned in first space corresponding to a plane in the second space tangent to the curve of the display.

6. The method of claim 1 wherein the images are displayed by physical projection onto the display surface from a position in the second coordinate system that is on-axis with a line intersecting the substantial center of and substantially normal to the display surface.

7. The method of claim 1, wherein the images are displayed by optical projection onto the display surface from a position in the second coordinate system that is off-axis from a line intersecting the substantial center of and substantially normal to the display surface, the off-axis projection introducing a distortion in the projected image, and wherein said transforming step includes the steps of:

projecting, towards the center of projection, points on the object contained within the first field of view onto a view surface subtending the first field of view; and

selecting a position for the view surface to compensate for the distortion so as to cause said respective first and second fields of view to be substantially identical.

8. The method of claim 1 wherein said image data creating step, said generating step and said displaying step occur in real time as the observer moves from one eyepoint position to another relative to the display.

9. The method of claim 1, wherein the plurality of eyepoint positions relative to the display surface are predetermined.

10. The method of claim 1, wherein the observer is moving along a predetermined trajectory relative to the display surface and the plurality of eyepoint positions are on the predetermined trajectory.

11. The method of claim 1, wherein the observer is moving along a random trajectory relative to the display surface and each of the plurality of eyepoint positions is a random position.

12. The method of claim 1, wherein the observer is moving with at least a second observer along a predetermined trajectory relative to the display surface and each of the plurality of eyepoint positions is in the collective vicinity of the observers.

13. The method of claim 1, wherein the second space is a space in the real world, the display surface forms at least part of a set physically existing in the real world, and the display surface and set are arranged for collective viewing by the observer from each of the plurality of eyepoints, the method further comprising the step of:

placing the object at a position in the first space corresponding to a desired real-world position of the object within the set,

whereby the displayed image of the object presents an illusion to the observer of the object physically existing in three-dimensions at the desired position within the real-world set as the observer moves from one eyepoint position to another.

14. The method of claim 13 wherein the real-world set includes a portion of a prop physically existing in the real world at a real-world position, and the object represents a virtual portion of the prop, the method further comprising the step of:

placing the virtual portion of the prop in the first space at a position relative to a position corresponding to the position in the real world of the real-world prop portion such that the displayed image of the virtual portion of the prop and the visage of the real-world portion of the prop present an appearance of a single coherent prop,

whereby the displayed image of the virtual portion of the prop and the real portion of the prop appear to the observer to visually recede to a common perspective vanishing point, and to exhibit motion parallax relative to one another consistent with a single coherent prop, as the observer moves from one eyepoint position to another.

15. The method of claim 14, wherein the real-world portion of the prop is placed substantially against the display surface in registration with the image of the virtual prop.

16. The method of claim 14, wherein the real-world portion of the prop is placed at a distance away from the display surface.

17. The method of claim 1, further comprising the step of:

positioning the object in the first space at a position corresponding to a position in the second space that is in front of the display surface, and at least partially within the second fields of view of the plurality of eyepoints.

18. The method of claim 1, further comprising the step of:

positioning the virtual object in the first virtual space at a position corresponding to a position in the second virtual space that is behind the virtual display surface.

19. The method of claim 1, further comprising the step of:

positioning the object in the first space so that at least part of the object is at a position in the first space corresponding to a position in the second space that is behind the display surface, and another part of the object is at a position in the first space corresponding to a position in the second space that is in front of the display surface and within the second fields of view of the plurality of eyepoints.

20. The method of claim 1 wherein the plurality of eyepoint positions is a first plurality of eyepoint positions and the associated images are first associated images, the method further comprising the steps of:

determining a second plurality of eyepoint positions, each corresponding to a respective one of the first plurality of eyepoint positions and spaced from its corresponding first eyepoint position by an inter-ocular offset distance;

performing again, for each of said second plurality of eyepoint positions, said creating, generating and displaying steps to present a second plurality of images of the object on the display surface; wherein:

said displaying step for each of said second plurality of images occurs sufficiently close in time to said displaying step for the corresponding one of said first plurality of images to enable said second image and said corresponding first image to be perceived by the observer simultaneously.

21. The method of claim 20, the method further comprising the step of:

causing each of said first plurality of images to be substantially seen by a first eye of the observer associated with the first eyepoint positions, and each of the second plurality of images to be substantially seen only by a second eye of the observer associated with the second eyepoint positions, whereby the observer at the plurality eyepoint positions sees displayed binocular images of the object.

22. The method of claim 1, further comprising the steps of:

determining the observer's positions in the second space; and

responsively displaying, when the observer is determined to be substantially at different ones of the plurality of eyepoint positions, the image of the object associated with the eyepoint position.

**23.** The method of claim 1 wherein the observer is moving within the field of view of an imaging device, and wherein said method further comprises the steps of:

storing first and second images viewed by the imaging device at respective first and second moments in time, said images respectively including first and second pluralities of pixels at distinct image locations having respective first and second associated encoded intensity values;

comparing the pixel intensity values for one of the first and second images with the corresponding pixel intensity values for the other of the first and second images, to identify an image location of at least one pixel as an active pixel the intensity value of which changed between the first and second images; and

calculating the position of the moving observer based on the image location of the at least one active pixel to determine different ones of the plurality of eyepoint positions.

**24.** The method of claim 23, wherein the field of view of the imaging device includes a plurality of tracking regions, and wherein said method further comprises the step of:

determining when the moving object is in different ones of the plurality of tracking regions.

**25.** The method of claim 1, further comprising the step of:

recording said generated images on a recording medium; and wherein:

said displaying step is performed by playing back said recorded generated images.

**26.** The method of claim 25, wherein said recording medium is at least one of a video disk and video tape.

**27.** The method of claim 1, wherein each of said plurality of images is displayed in real time when the observer is determined to be substantially at the eyepoint position associated with the image.

**28.** The method of claim 1, wherein the observer is moving relative to the display surface with at least a second observer, and each of the plurality of eyepoint positions is in the collective vicinity of the observers' positions within the second space.

**29.** The method of claim 28, wherein the observer and second observer are moving with one another in a ride vehicle and each of the plurality of eyepoint positions is in the vicinity of the ride vehicle.

**30.** The method of claim 1 wherein said relationship between the first and second spaces is a scaled relationship of one-to-one (1:1).

**31.** The method of claim 1 wherein said relationship between the first and second spaces is a scaled relationship of other than one-to-one (1:1).

**32.** The method of claim 1, wherein the display surface comprises at least a portion of a display screen.

**33.** The method of claim 1, wherein the display surface comprises substantially all of a display screen.

**34.** The method of claim 1, wherein the display surface is stationary and the plurality of eyepoints result from the observer moving in the first space relative to the stationary display surface.

**35.** The method of claim 1, further comprising the steps of:

repeating said defining, creating, generating and displaying steps for another first virtual space and another display surface,

whereby multiple images of first virtual spaces are displayed for viewing by the observer on multiple display surfaces at the plurality of eyepoint positions.

**36.** The method of claim 35, wherein said multiple images are displayed for viewing by the observer simultaneously.

**37.** The method of claim 35, wherein said multiple images are displayed for viewing by the observer sequentially.

**38.** The method of claim 35, wherein said first virtual spaces are modeled from different three-dimensional data.

**39.** The method of claim 35, wherein said first virtual spaces are modeled from the same three-dimensional data.

**40.** A method of sequentially displaying a plurality of images of a first virtual space containing at least one virtual object, the object being represented by three-dimensional object data and located at a position in the first virtual space, the images being displayed on a virtual display surface having a virtual display surface position in a second virtual space for viewing by an observer from a plurality of eyepoints in the second virtual space, each eyepoint associated with a different one of the plurality of images and having a different position relative to the position of the display surface, the method comprising the steps of:

defining a relationship between the first and second virtual spaces so that positions in one space have corresponding positions in the other space;

for each respective one of the plurality of images, creating image data for the object by transforming the object data through a transformation with respect to a center of projection relative to which at least a portion of the object subtends a respective first field of view, the center of projection located in the first virtual space at a position substantially coincident with a position corresponding to the position of the eyepoint in the second virtual space associated with the image;

storing said image data for each respective one of the plurality of images as respective texture data representative of a respective plurality of two-dimensional image textures;

displaying different respective ones of the plurality of images to the observer by mapping each respective one of the plurality of image textures onto a surface forming the virtual display, each image being displayed by its respective texture when the eyepoint of the observer is in the vicinity of the eyepoint position associated with the image so that each respective image of the at least portion of the object texture-mapped onto the virtual surface subtends a respective second field of view relative to its associated eyepoint; wherein:

said transformation is chosen to cause, for each of the plurality of texture-mapped images, the respective first and second fields of view to be substantially identical.

**41.** The method of claim 40, wherein said texture is mapped onto a portion of said virtual surface.

**42.** The method of claim 40, further comprising the steps of:

repeating said defining, creating, storing and displaying steps for another first virtual space and another virtual display surface,

whereby multiple images of first virtual spaces are simultaneously displayed for viewing by the observer at the plurality of eyepoint positions.

**43.** The method of claim 40, wherein the virtual object in said first virtual space is rendered using a rendering technique different from techniques used to render the second virtual space.

**44.** The method of claim 40, wherein said displaying step occurs in real time as the observer moves from one eyepoint position to another in the second virtual space.

**45.** The method of claim 40, wherein said plurality of eyepoint positions are pre-determined.

**46.** The method of claim 40, wherein the plurality of predetermined eyepoints lie along a predetermined trajectory.

**47.** The method of claim 40 wherein the virtual display surface is stationary at a position in the second virtual space, and the plurality of eyepoints result from the eyepoint of the observer moving between different positions of the second virtual space.

**48.** The method of claim 40 wherein the eyepoint of the observer is stationary at a position in the second virtual space and the plurality of eyepoints result from the virtual display surface moving between a corresponding plurality of positions in the second virtual space.

**49.** The method of claim 40, further comprising the step of:

positioning the virtual object in the first virtual space at a position corresponding to a position in the second virtual space that is in front of the virtual display surface.

**50.** The method of claim 40, further comprising the step of:

positioning the virtual object in the first virtual space at a position corresponding to a position in the second virtual space that is behind the virtual display surface.

**51.** The method of claim 40, further comprising the step of:

positioning the virtual object in the first virtual space so that part of the virtual object is at a position in the first virtual space corresponding to a position in the second virtual space that is behind the virtual display surface, and another part of the virtual object is at a position in the first virtual space corresponding to a position in the second virtual space that is in front of the virtual display surface.

**52.** The method of claim 40 wherein said relationship between the first and second virtual spaces is a scaled relationship of one-to-one (1:1).

**53.** The method of claim 40 wherein said relationship between the first and second virtual spaces is a scaled relationship of other than one-to-one (1:1).

**54.** A system of sequentially displaying a plurality of images of a first virtual space containing at least one virtual object, the object being represented by three-dimensional object data and located at a position in the first virtual space, the images being displayed on a display surface having a display surface position in a second space for viewing by an observer from a plurality of eyepoints in the second space, each eyepoint associated with a different one of the plurality of images and having a different position relative to the position of the display surface, the system comprising:

means for defining a relationship between the first and second spaces so that positions in one space have corresponding positions in the other space;

means for creating image data for the object, for each respective one of the plurality of images, by transforming the object data through a transformation with respect to a center of projection relative to which at least a portion of the object subtends a respective first field of view, the center of projection located in the first space at a position substantially coincident with a position corresponding to the position of the eyepoint in the second space associated with the image;

means for generating the plurality of images based on said image data; and

means for displaying the plurality of images on the display surface in the second space so that each respective image of the at least portion of the object subtends a respective second field of view relative to the eyepoint associated with the image; wherein

said transformation is chosen to cause, for each of the plurality of images, the respective first and second fields of view to be substantially identical.

**55.** The system of claim 54, wherein said creating means includes:

means for projecting points on the object contained within the first field of view, towards the center of projection, onto a view surface subtending the first field of view and positioned so as to cause said respective first and second fields of view to be substantially identical.

**56.** The system of claim 55, wherein the view surface in the first space for each of the respective images is positioned to be substantially parallel to the display surface positioned in the second space.

**57.** The system of claim 55, wherein the display surface is substantially planar and the view surface is a view plane.

**58.** The system of claim 55 wherein the display surface is curved and the view surface is a view plane, and the view plane is positioned in the first space to be substantially parallel to a plane positioned in first space corresponding to a plane in the second space tangent to the curve of the display.

**59.** The system of claim 54, wherein said display means includes a projector for casting light representative of each image onto the display surface from a position in the second coordinate system that is on-axis with a line intersecting the substantial center of and substantially normal to the display surface.

**60.** The system of claim 54, wherein said display means includes a projector for casting light representative of each image onto the display surface from a position in the second coordinate system that is off-axis from a line intersecting the substantial center of and substantially normal to the display surface, the off-axis projection introducing a distortion in the projected image, and wherein said creating means includes:

means for projecting points on the object contained within the first field of view, towards the center of projection, onto a view surface subtending the first field of view and positioned to compensate for the distortion to cause said respective first and second fields of view to be substantially identical.

**61.** The system of claim 54 wherein said image data creating means, said generating means and said displaying means operate to perform their functions in real time as the observer moves from one eyepoint position to another relative to the display.

**62.** The system of claim 54, wherein the plurality of eyepoint positions relative to the display surface are predetermined.

**63.** The system of claim 54, wherein the observer is moving along a predetermined trajectory relative to the display surface and each of the plurality of eyepoint positions is on the predetermined trajectory.

**64.** The system of claim 54, wherein the observer is moving along a random trajectory relative to the display surface and each of the plurality of eyepoint positions is a random position.

**65.** The system of claim 54, wherein the observer is moving with at least a second observer along a predetermined trajectory relative to the display surface and each of the plurality of eyepoint positions is in the collective vicinity of the observers.

**66.** The system of claim 54, wherein the second space is a space in the real world, the display surface forms at least part of a set physically existing in the real world, and the display surface and set are arranged for collective viewing by the observer from each of the plurality of eyepoints, the system further comprising:

means for placing the object at a position in the first space corresponding to a desired real-world position of the object within the set,

whereby the displayed image of the object presents an illusion to the observer of the object physically existing in three-dimensions at the desired position within the real-world set as the observer moves from one eyepoint position to another.

**67.** The system of claim 66, wherein the real-world set includes a portion of a prop physically existing in the real world at a real-world position, and the object represents a virtual portion of the prop, the system further comprising:

means for placing the virtual portion of the prop in the first space at a position relative to a position corresponding to the position in the real world of the real-world prop portion such that the displayed image of the virtual portion of the prop and the visage of the real-world portion of the prop present an appearance of a single coherent prop,

whereby the displayed image of the virtual portion of the prop and the real portion of the prop appear to the observer to visually recede to a common perspective vanishing point, and to exhibit motion parallax relative to one another consistent with a single coherent prop, as the observer moves from one eyepoint position to another.

**68.** The system of claim 67, wherein the real-world portion of the prop is placed substantially against the display surface in registration with the image of the virtual prop.

**69.** The system of claim 67, wherein the real-world portion of the prop is placed at a distance away from the display surface.

**70.** The system of claim 54, further comprising:

means for positioning the object in the first space at a position corresponding to a position in the second space that is in front of the display surface, and at least partially within the second fields of view of the plurality of eyepoints.

**71.** The system of claim 54, further comprising:

means for positioning the virtual object in the first virtual space at a position corresponding to a position in the second virtual space that is behind the virtual display surface.

**72.** The system of claim 54, further comprising:

means for positioning the object in the first space so that at least part of the object is at a position in the first space corresponding to a position in the second space that is behind the display surface, and another part of the object is at a position in the first space corresponding to a position in the second space that is in front of the display surface and within the second fields of view of the plurality of eyepoints.

**73.** The system of claim 54 wherein the plurality of eyepoint positions is a first plurality of eyepoint positions and the associated images are first associated images, the system further comprising:

means for determining a second plurality of eyepoint positions, each corresponding to a respective one of the first plurality of eyepoint positions and spaced from its corresponding first eyepoint position by an inter-ocular offset distance;

means for causing said creating, generating and displaying means to perform their functions again, for each of said second plurality of eyepoint positions, to present a second plurality of images of the object on the display surface; wherein:

said displaying means displays each of said second plurality of images sufficiently close in time to when said displaying means displays the corresponding one of said first plurality of images to enable said second image and said corresponding first image to be perceived by the observer simultaneously.

**74.** The system of claim 73, wherein each of the first plurality of eyepoint positions and the corresponding one of the second plurality of eyepoint positions constitutes a paired eyepoint position, the system further comprising:

optical means for causing the first plurality of images to be substantially seen by only a first eye of the observer associated with the first eyepoint positions, and the second plurality of images to be seen only by a second eye of the observer associated with the second eyepoint positions,

whereby the observer at each of the plurality of paired eyepoint positions sees binocular images of the object.

**75.** The system of claim 74, wherein said optical means is worn by the observer as eyeglasses.

**76.** The system of claim 54, further comprising:

means for determining the observer's positions in the second space; and wherein

said displaying means functions to display, when the observer is determined to be substantially at different ones of the plurality of eyepoint positions, the image of the object associated with the eyepoint position.

**77.** The system of claim 54 wherein the observer is moving within the field of view of an imaging device, and wherein said system further comprises:

means for storing first and second images viewed by the imaging device at respective first and second moments in time, said images respectively including first and second pluralities of pixels at distinct image locations having respective first and second associated encoded intensity values;

means for comparing the pixel intensity values for one of the first and second images with the corresponding pixel intensity values for the other of the first and second images, to identify an image location of at least one pixel as an active pixel the intensity value of which changed between the first and second images; and

means for calculating the position of the moving observer based on the image location of the at least one active pixel to determine different ones of the plurality of eyepoint positions.

**78.** The system of claim 77, wherein the field of view of the imaging device includes a plurality of tracking regions, and wherein said system further includes:

means for determining when the moving object is in different ones of the plurality of tracking regions.

79. The system of claim 76, wherein said different positions are determined by calculating the position of the observer based upon a known speed and trajectory of the observer.

80. The system of claim 76, wherein said determining means includes at least one position sensor placed at a known position in the second space.

81. The system of claim 54, further comprising:
    means for recording said generated images on a recording medium; and wherein:
    said displaying means operates to play back said recorded generated images.

82. The system of claim 81, wherein said recording medium is at least one of a video disk and video tape.

83. The system of claim 54, wherein each of said images is displayed in real time when the observer is determined to be substantially at the eyepoint position associated with the image.

84. The system of claim 54, wherein the observer is moving relative to the display surface with at least a second observer, and each of the plurality of eyepoint positions is in the collective vicinity of the observers' positions within the second space.

85. The system of claim 84, wherein the observer and second observer are moving with one another in a ride vehicle and each of the plurality of eyepoint positions is in the vicinity of the ride vehicle.

86. The system of claim 54 wherein said relationship between the first and second spaces is a scaled relationship of one-to-one (1:1).

87. The system of claim 54 wherein said relationship between the first and second spaces is a scaled relationship of other than one-to-one (1:1).

88. The system of claim 54, wherein the display surface comprises at least a portion of a display screen.

89. The system of claim 54, wherein the display surface comprises substantially all of a display screen.

90. The system of claim 54, wherein the display surface is stationary and the plurality of eyepoints result from the observer moving in the first space relative to the stationary display surface.

91. The system of claim 54, further comprising:
    means for causing said defining, creating, generating and displaying means to perform their functions again for another first virtual space and another display surface,
    whereby multiple images of first virtual spaces are displayed for viewing by the observer on multiple display surfaces at the plurality of eyepoint positions.

92. The system of claim 91, wherein said multiple images are displayed for viewing by the observer simultaneously.

93. The system of claim 91, wherein said multiple images are displayed for viewing by the observer sequentially.

94. The system of claim 91, wherein said first virtual spaces are modeled from different three-dimensional data.

95. The system of claim 91, wherein said first virtual spaces are modeled from the same three-dimensional data.

96. A system of sequentially displaying a plurality of images of a first virtual space containing at least one virtual object, the object being represented by three-dimensional object data and located at a position in the first virtual space, the images being displayed on a virtual display surface having a virtual display surface position in a second virtual space for viewing by an observer from a plurality of eyepoints in the second virtual space, each eyepoint associated with a different one of the plurality of images and

35

having a different position relative to the position of the display surface, the system comprising:

means for defining a relationship between the first and second virtual spaces so that positions in one space have corresponding positions in the other space;

means for creating, for each respective one of the plurality of images, image data for the object by transforming the object data through a transformation with respect to a center of projection relative to which at least a portion of the object subtends a respective first field of view, the center of projection located in the first virtual space at a position substantially coincident with a position corresponding to the position of the eyepoint in the second virtual space associated with the image;

means for storing said image data for each respective one of the plurality of images as respective texture data representative of a respective plurality of two-dimensional image textures;

means for displaying different respective ones of the plurality of images to the observer by mapping each respective one of the plurality of image textures onto a surface forming the virtual display, each image being displayed by its respective texture when the eyepoint of the observer is in the vicinity of the eyepoint position associated with the image so that each respective image of the at least portion of the object texture-mapped onto the virtual surface subtends a respective second field of view relative to its associated eyepoint; wherein:

said transformation is chosen to cause, for each of the plurality of texture-mapped images, the respective first and second fields of view to be substantially identical.

97. The system of claim 96, wherein said texture is mapped onto a portion of said virtual surface.

98. The system of claim 97, further comprising:

means for repeating said defining, creating, storing and displaying steps for another first virtual space and another virtual display surface,

whereby multiple images of first virtual spaces are simultaneously displayed for viewing by the observer at the plurality of eyepoint positions.

99. The system of claim 96, wherein the virtual object in said first virtual space is rendered using a rendering technique different from techniques used to render the second virtual space.

100. The system of claim 96, wherein said displaying means performs its functions in real time as the observer moves from one eyepoint position to another in the second virtual space.

101. The system of claim 96, wherein said plurality of eyepoint positions are predetermined.

102. The system of claim 101, wherein the plurality of predetermined eyepoints lie along a predetermined trajectory.

103. The system of claim 96 wherein the virtual display surface is stationary at its position in the second virtual space, and the plurality of eyepoints result from the eyepoint of the observer moving between different positions of the second virtual space.

104. The system of claim 96 wherein the eyepoint of the observer is stationary at a position in the second virtual space and the plurality of eyepoints result from the virtual display surface moving between a corresponding plurality of positions in the second virtual space.

105. The system of claim 96, further comprising:

positioning the virtual object in the first virtual space at a position corresponding to a position in the second virtual space that is in front of the virtual display surface.

106. The system of claim 96, further comprising:

positioning the virtual object in the first virtual space at a position corresponding to a position in the second virtual space that is behind the virtual display surface.

107. The system of claim 96, further comprising:

positioning the virtual object in the first virtual space so that part of the virtual object is at a first virtual space position corresponding to a position in the second virtual space that is behind the virtual display surface, and another part of the virtual object is at a first virtual space position corresponding to

EP 0 583 060 A2

a position in the second virtual space that is in front of the virtual display surface.

**108.** The system of claim 96 wherein the defined relationship between the first and second virtual spaces is a scaled relationship of one-to-one (1:1).

**109.** The system of claim 96 wherein the defined relationship between the first and second virtual spaces is a scaled relationship of other than one-to-one (1:1).

**110.** A method of sequentially displaying a plurality of images of a first virtual space containing at least one virtual object, the object being represented by three-dimensional object data and located at a position in the first virtual space, the images being displayed on a display surface having a display surface position in a second space for viewing by an observer from a plurality of eyepoints in the second space, each eyepoint associated with a different one of the plurality of images and having a different position relative to the position of the display surface, and the first and second spaces being in defined relationship to one another so that positions in one space have corresponding positions in the other space, the method comprising the steps of:

determining the observer's positions in the second space to determine different ones of the plurality of eyepoint positions;

for each respective one of the different determined eyepoint positions, creating image data for the object by transforming the object data through a transformation with respect to a center of projection relative to which at least a portion of the object subtends a respective first field of view, the center of projection located in the first space at a position substantially coincident with a position corresponding to the determined position of the eyepoint in the second space;

generating the plurality of images based on said image data, each image associated with a different one of the determined eyepoint positions; and

displaying each of the plurality of images on the display surface in the second space when the observer is determined to be substantially at an eyepoint position associated with the image, so that each respective image of the at least portion of the object subtends a respective second field of view relative to the associated determined eyepoint position; wherein

said transformation is chosen to cause, for each of the plurality of images, the respective first and second fields of view to be substantially identical.

**111.** The method of claim 110, wherein each of said determining, creating, generating and displaying steps occur in real time as the observer moves from one eyepoint position to another.

**112.** The method of claim 110 wherein the observer is moving within a field of view of an imaging device, and wherein said determining step further comprises the steps of:

storing a first image viewed by the imaging device as a first plurality of pixels at distinct locations within the first image, the first plurality of pixels having first associated encoded intensity values;

storing a second image subsequently viewed by the imaging device as a second plurality of pixels at distinct locations within the second image corresponding to the pixel locations of the first image, said second plurality of pixels having second associated encoded intensity values;

comparing the pixel intensity values for one of the first and second images with the corresponding pixel intensity values for the other of the first and second images, to identify an image location of at least one pixel as an active pixel the intensity value of which changed between the first and second images; and

calculating the position of the moving observer based on the image location of the at least one active pixel.

**113.** The method of claim 112, wherein the field of view of the imaging device includes a plurality of tracking regions, and wherein said method further comprises the step of:

determining when the moving object is in different ones of the plurality of tracking regions.

**114.** The method of claim 112, wherein the position of the observer is calculated in two dimensions.

**115.** The method of claim 112 wherein the observer is moving within a field of view of a second video imaging device, and wherein said determining step further comprises the steps of:

storing a third image viewed by the second imaging device as a third plurality of pixels at distinct

37

locations within the third image, the third plurality of pixels having third associated intensity values;

storing a fourth image subsequently viewed by the second imaging device as a fourth plurality of pixels at distinct locations within the fourth image corresponding to the pixel locations of the third image, said fourth plurality of pixels having fourth associated intensity values;

comparing the pixel intensity values for one of the third and fourth images with the corresponding pixel intensity values for the other of the third and fourth images, to identify at least one pixel as an active pixel the intensity value of which changed between the third and fourth images; and

calculating the position of the moving observer in three dimensions based upon the locations of the at least one active pixel associated with the first and second images and the at least one active pixel associated with the third and fourth images.

116. The method of claim 112 wherein the observer is moving within a field of view of an imaging device, and wherein said determining step comprises the steps of:

repetitively generating a plurality of pairs of first and second images representing the field of view, said first and second images respectively representing the field of view at first and second moments in time;

storing data indicative of the intensities of pixels characterizing the first image, each of the pixels being at a different location within the image;

comparing the data indicative of the intensities of the pixels characterizing the first image with data indicative of the intensities of pixels in corresponding locations characterizing the second image, to identify an image location of at least one active pixel the value of which has changed between the first and second images; and

calculating the position of the moving observer based upon the image location of the at least one active pixel,

whereby a plurality of positions are calculated for the observer for subsequent pairs of first and second images to determine different ones of the observer's eyepoint positions in real time as the observer moves.

117. The method of claim 116, wherein the field of view of the imaging device includes a plurality of tracking regions, and wherein said method further comprises the step of:

determining when the moving object is in different ones of the plurality of tracking regions.

118. The method of claim 116, wherein the position of the observer is calculated in two-dimensions.

119. The method of claim 116 wherein the observer is moving within a second field of view of a second imaging device, and wherein said determining step further comprises the steps of:

repetitively generating a plurality of pairs of third and fourth images representing the second field of view substantially at, respectively, the first and second moments in time;

storing data indicative of the intensities of pixels characterizing the third image, each of the pixels being at a different location within the image;

comparing the data indicative of the intensities of the pixels characterizing the third image with data indicative of the intensities of pixels in corresponding locations characterizing the fourth image, to determine an image location of at least one active pixel the value of which has changed between the third and fourth images; and

calculating the position of the observer in three dimensions based upon the image locations of the at least one active pixel associated with the first and second images and the at least one active pixel associated with the third and fourth images,

whereby a plurality of three-dimensional positions are calculated for the observer for subsequent pairs of first and second images, and corresponding subsequent pairs of third and fourth images, to determine different ones of the observer's eyepoint positions in three dimensions in real time as the observer moves.

120. A system for sequentially displaying a plurality of images of a first virtual space containing at least one virtual object, the object being represented by three-dimensional object data and located at a position in the first virtual space, the images being displayed on a display surface having a display surface position in a second space for viewing by an observer from a plurality of eyepoints in the second space, each eyepoint associated with a different one of the plurality of images and having a different position relative to the position of the display surface, and the first and second spaces being in defined relationship to one another so that positions in one space have corresponding positions in the other space, the system comprising:

means for determining the observer's positions in the second space to determine different ones of the plurality of eyepoint positions;

means for creating, for each respective one of the different determined eyepoint positions, image data for the object by transforming the object data through a transformation with respect to a center of projection relative to which at least a portion of the object subtends a respective first field of view, the center of projection located in the first space at a position substantially coincident with a position corresponding to the determined position of the eyepoint in the second space;

means for generating the plurality of images based on said image data, each image associated with a different one of the determined eyepoint positions; and

means for displaying each of the plurality of images on the display surface in the second space when the observer is determined to be substantially at an eyepoint position associated with the image, so that each respective image of the at least portion of the object subtends a respective second field of view relative to the associated determined eyepoint position; wherein

said transformation is chosen to cause, for each of the plurality of images, the respective first and second fields of view to be substantially identical.

121. The system of claim 120, wherein each of said means operate to perform their functions in real time as the observer moves from one eyepoint position to another.

122. The system of claim 120 wherein the observer is moving within a field of view of an imaging device, and wherein said determining means further comprises:

means for storing a first image viewed by the imaging device as a first plurality of pixels at distinct locations within the first image, the first plurality of pixels having first associated encoded intensity values;

means for storing a second image subsequently viewed by the imaging device as a second plurality of pixels at distinct locations within the second image corresponding to the pixel locations of the first image, said second plurality of pixels having second associated encoded intensity values;

means for comparing the pixel intensity values for one of the first and second images with the corresponding pixel intensity values for the other of the first and second images, to identify an image location of at least one pixel as an active pixel the intensity value of which changed between the first and second images; and

means for calculating the position of the moving observer based on the image location of the at least one active pixel.

123. The system of claim 122, wherein the field of view of the imaging device includes a plurality of tracking regions, and wherein said system further includes:

means for determining when the moving object is in different ones of the plurality of tracking regions.

124. The system of claim 122, wherein the position of the observer is calculated in two dimensions.

125. The system of claim 122 wherein the observer is moving within a field of view of a second video imaging device, and wherein said determining means further comprises:

means for storing a third image viewed by the second imaging device as a third plurality of pixels at distinct locations within the third image, the third plurality of pixels having third associated intensity values;

means for storing a fourth image subsequently viewed by the second imaging device as a fourth plurality of pixels at distinct locations within the fourth image corresponding to the pixel locations of the third image, said fourth plurality of pixels having fourth associated intensity values;

means for comparing the pixel intensity values for one of the third and fourth images with the corresponding pixel intensity values for the other of the third and fourth images, to identify at least one pixel as an active pixel the intensity value of which changed between the third and fourth images; and

means for calculating the position of the moving observer in three dimensions based upon the locations of the at least one active pixel associated with the first and second images and the at least one active pixel associated with the third and fourth images.

126. The system of claim 122 wherein the observer is moving within a field of view of an imaging device, and wherein said determining means comprises:

means for repetitively generating a plurality of pairs of first and second images representing the field of view, said first and second images respectively representing the field of view at first and second moments in time;

means for storing data indicative of the intensities of pixels characterizing the first image, each of the pixels being at a different location within the image;

means for comparing the data indicative of the intensities of the pixels characterizing the first image with data indicative of the intensities of pixels in corresponding locations characterizing the second image, to identify an image location of at least one active pixel the value of which has changed between the first and second images; and

means for calculating the position of the moving observer based upon the image location of the at least one active pixel,

whereby a plurality of positions are calculated for the observer for subsequent pairs of first and second images to determine different ones of the observer's eyepoint positions in real time as the observer moves.

127. The system of claim 126, wherein the field of view of the imaging device includes a plurality of tracking regions, and wherein said system further includes :

means for determining when the moving object is in different ones of the plurality of tracking regions.

128. The system of claim 126, wherein the position of the observer is calculated in two-dimensions.

129. The system of claim 126 wherein the observer is moving within a second field of view of a second imaging device, and wherein said determining means further comprises:

means for repetitively generating a plurality of pairs of third and fourth images representing the second field of view substantially at, respectively, the first and second moments in time;

means for storing data indicative of the intensities of pixels characterizing the third image, each of the pixels being at a different location within the image;

means for comparing the data indicative of the intensities of the pixels characterizing the third image with data indicative of the intensities of pixels in corresponding locations characterizing the fourth image, to determine an image location of at least one active pixel the value of which has changed between the third and fourth images; and

means for calculating the position of the observer in three dimensions based upon the image locations of the at least one active pixel associated with the first and second images and the at least one active pixel associated with the third and fourth images,

whereby a plurality of three-dimensional positions are calculated for the observer for subsequent pairs of first and second images, and corresponding subsequent pairs of third and fourth images, to determine different ones of the observer's eyepoint positions in three dimensions in real time as the observer moves.

EP 0 583 060 A2

FIG. 1A

# FIG. 1B

VIRTUAL
WORLD
COORD.

P (XA,YA,ZA)

160

115

(0,0,0)

MODEL TRANSFORM →

# FIG. 1C

VIRTUAL
WORLD
COORD.

Q

115

(0,0,0)

160

P (XB,YB,ZB)

↓ VIEWING
TRANSFORM

# FIG. 1E

VIRTUAL
"CLIP"
COORD.

Yₑ
Xₑ
170
(0,0,0)
Zₑ
EP

125
126
170C
115
129

160
P
170B
170A
131

← PROJECTION
TRANSFORM

# FIG. 1D

VIRTUAL
EYE
COORD.

Yₑ
Xₑ
170
(0,0,0)
Zₑ
EP

115

160
P

FIG. 2

**FIG. 3**

210

320

270

310

EP' (Vx',Vy',Vz')
(a',b',c')

330

340

100

a

b

FIG. 4

**FIG. 5**

# FIG. 6

- DEFINE CONSTANTS — 602
- GET INTEROCULAR OFFSET — 604
- CALCULATE SCALED CONGRUENCY FACTORS — 606
- INITIALIZE — 610

WHILE EXITFLAG=FALSE? — 620
- NO → EXIT (TERMINATE) — 630
- YES → OBTAIN EYEPOINT POSITION — 660
  - DRAW THE SCENE — 640
  - INCREMENT ANIMATION VARIABLE — 650

WHILE EVENTS IN QUEUE? — 670
- YES → ESC KEY? — 672
  - YES → EXITFLAG=TRUE — 672A
  - NO → REDRAW? — 674
    - YES → RESHAPE VIEWPORT — 674A
    - NO → MIDDLEMOUSE? — 676
      - YES → QUEUE MOUSE X,Y UNTIL MOUSEUP — 676A
      - NO → MOUSEX? — 671
        - YES → UPDATE dx — 671A
        - NO → MOUSEY? — 673
          - YES → UPDATE dy — 673A
          - NO → RIGHTMOUSE? — 678
            - YES → DO POPUP — 678A
              - NONE
              - "EXIT" → EXITFLAG=TRUE — 678B
            - NO

DRAW THE SCENE

# FIG. 7

```
              710
  ┌─────────────────────────┐
  │   DECLARE VARIABLES     │
  └─────────────────────────┘
              │
              ▼                                    712
  ┌──────────────────────────────────────────────────┐
  │ CONVERT EYEPOINT POSITION TO VIRTUAL COORDINATES  │
  └──────────────────────────────────────────────────┘
              │
              ▼                    714
  ┌─────────────────────────────┐
  │  CALCULATE DISPLAY NORMAL   │
  └─────────────────────────────┘
              │
              ▼                                          720
  ┌──────────────────────────────────────────────────────┐
  │ PUSH MODEL/VIEW MATRIX & PRE-MULTIPLY VIEWING TRANSFORM│
  └──────────────────────────────────────────────────────┘
              │
              ▼                                             730
  ┌────────────────────────────────────────────────────────────┐
  │ COMPUTE CLIPPING PLANES & REPLACE PROJECTION TRANSFORM      │
  └────────────────────────────────────────────────────────────┘
              │
              ▼                          735
  ┌──────────────────────────────┐
  │   RESET COLOR & Z-BUFFERS    │
  └──────────────────────────────┘
              │
              ▼              740
   ╱──────────────────────╱
  ╱  DRAW DESIREDSTATIC   ╱
 ╱       OBJECTS         ╱
╱──────────────────────╱
              │
              ▼                750
   ╱──────────────────────╱
  ╱  DRAW  DESIRED ANIMATED╱
 ╱       OBJECTS         ╱
╱──────────────────────╱
              │
              ▼                                        755
  ┌─────────────────────────────────────────────────────┐
  │ POP MODEL/VIEW MATRIX TO PURGE VIEWING TRANSFORM     │
  └─────────────────────────────────────────────────────┘
              │
              ▼                        760
  ┌──────────────────────────────┐
  │   SWAPBUFFERS TO DISPLAY     │
  │       DRAWN IMAGE            │
  └──────────────────────────────┘
              │
              ▼              765
  ┌──────────────────┐
  │     RETURN       │
  └──────────────────┘
```

OBTAIN EYEPOINT POSITION

FIG. 8

DEFINE BUFFER SIZE,
DECLARE VARIABLES
CHANGED=0 — 820

TRY TO READ CURRENT BYTE — 830

WHILE
IS THERE A CURRENT
BYTE? — 835

YES

IS CURRENT BYTE "FF"
(THE TERMINATOR) ? — 840

YES

IS BUFFER
INDEX==2? — 850

YES

NO

NO

IS BUFFER
INDEX<BUFFERSIZE — 842

NO

YES

STORE
CURRENT
BYTE INTO
BUFFER — 844

INCREMENT
BUFFER
INDEX — 846

STORE VALUES
TO RX, RY
SET
CHANGED=1 — 855

RESET BUFFER
INDEX TO 0 — 860

RETURN 0 IF CHANGED=0
RETURN 1 IF CHANGED=1 — 870

49

FIG. 9A

FIG. 9B

EP 0 583 060 A2

INITIALIZE
FRAME GRABBER ——— 1005

CLEAR X & Y
CLEAR COUNT ——— 1010

CONFIGURE SERIAL PORT ——— 1020

GET SCREEN TYPE ——— 1030

INITIALIZE PIXEL
SAMPLING LUT ——— 1040

DELAY BY WAITING
FOR 3 ODD FIELDS ——— 1050

INITIALIZE HISTORY BUFFER
WITH A FRAME ——— 1060

WAIT FOR ODD FIELD ——— 1070

GET CENTROID & ACTIVE PIXEL
COUNT, SEND TO THE COM PORT ——— 1080

COMPUTE POSITION &
SEND TO COM PORT ——— 1085

WRITE COUNT, (X,Y) AND
POSITION TO SCREEN
FOR MONITORING ——— 1090

FIG. 10

1105 — INITIALIZE/RESET POINTERS & ACCUMULATORS

1110 — LOAD CURRENT PIXEL VALUE

1115 — SUBTRACT HISTORY PIXEL FROM CURRENT PIXEL

DOES PIXEL QUALIFY AS ACTIVE? — 1120

NO → 1123 MAKE PIXEL BLACK ON MONITOR

YES

MAKE PIXEL WHITE ON MONITOR — 1125

ADD X & Y VALUES TO RESPECTIVE ACCUMULATORS — 1130

INCREMENT COUNT OF ACTIVE PIXELS — 1135

1199 RETURN

UPDATE HISTORY BUFFER AND INCREMENT X PIXEL POINTER — 1140

1145 END OF LINE? NO

CLEAR POINTERS

1195

INCREMENT Y PIXEL POINTER AND RESET X PIXEL POINTER — 1150

1155 END OF SCREEN? NO

YES

YES IS COUNT 0? — 1160

NO

DIVIDE X ACCUMULATOR BY # OF ACTIVE PIXELS — 1165

MOVING WINDOW X CENTROID AVERAGING FILTER — 1170

1175 — SEND X COORDINATE TO SERIAL PORT

1180 — DIVIDE Y ACCUMULATOR BY # OF ACTIVE PIXELS

MOVING WINDOW Y CENTROID AVERAGING FILTER — 1185

**FIG. 11**

SEND Y COORDINATE TO SERIAL PORT — 1190

FIG. 12